(19) 

Europäisches
Patentamt
European
Patent Office
Office européen
des brevets

(11) **EP 3 333 214 B1**

(12) **EUROPEAN PATENT SPECIFICATION**

(45) Date of publication and mention
of the grant of the patent:
**22.07.2020  Bulletin 2020/30**

(21) Application number: **16832886.2**

(22) Date of filing: **28.07.2016**

(51) Int Cl.:
**B29B 15/12** *(2006.01)*          **C08J 5/04** *(2006.01)*
**B29C 70/06** *(2006.01)*          **B29K 101/12** *(2006.01)*
**B29K 105/08** *(2006.01)*

(86) International application number:
**PCT/JP2016/072122**

(87) International publication number:
**WO 2017/022607 (09.02.2017 Gazette 2017/06)**

(54) **PRODUCTION METHOD FOR FIBER REINFORCED RESIN SHEET MATERIAL**

HERSTELLUNGSVERFAHREN FÜR FASERVERSTÄRKTES HARZFOLIENMATERIAL

PROCÉDÉ DE FABRICATION D'UNE MATIÈRE, EN FEUILLE, DE RÉSINE RENFORCÉE PAR DES
FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.08.2015  JP 2015153796**

(43) Date of publication of application:
**13.06.2018  Bulletin 2018/24**

(73) Proprietor: **Fukui Prefectural Government
Fukui-shi
Fukui 910-8580 (JP)**

(72) Inventors:
• **KAWABE Kazumasa**
  **Fukui-shi**
  **Fukui 910-0102 (JP)**
• **YAMADA Kohei**
  **Fukui-shi**
  **Fukui 910-0102 (JP)**
• **KONDO Keiichi**
  **Fukui-shi**
  **Fukui 910-0102 (JP)**

• **IYO Hirofumi**
  **Fukui-shi**
  **Fukui 910-0102 (JP)**

(74) Representative: **Office Freylinger**
  **P.O. Box 48**
  **8001 Strassen (LU)**

(56) References cited:
**EP-A1- 2 436 809          WO-A2-2005/033390
JP-A- H03 243 309          JP-A- H03 243 309
JP-A- 2007 518 890          JP-B1- 5 870 392
JP-B2- 5 553 074**

• **MILLER A ET AL: "IMPREGNATION
TECHNIQUES FOR THERMOPLASTIC MATRIX
COMPOSITES", POLYMERS AND POLYMER
COMPOSITES, RAPRA TECHNOLOGY, vol. 4, no.
7, 1 January 1996 (1996-01-01) , pages 459-481,
XP000658227, ISSN: 0967-3911**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Technical Field

The present invention relates to a fiber reinforced resin material including a reinforcing fiber and a thermoplastic resin. Particularly, the present invention relates to a production method for a fiber reinforced resin sheet material, the method including the steps of: introducing a fiber sheet material including a reinforcing fiber, such as a carbon fiber or glass fiber, and a resin sheet material including a thermoplastic resin, such as a polypropylene resin, a polyamide resin, or a polyetherimide resin, into a heating and pressing apparatus (e.g., a heating and pressing apparatus including a plurality of rotary heating rolls);
and melting the resin sheet material and continuously impregnating or semi-impregnating the same into the fiber sheet material.

Background Art

Conventionally, a fiber reinforced resin material (fiber reinforced composite material) including a thermosetting resin or thermoplastic resin as a matrix resin has a light weight and high elasticity as compared with a metal material, and has a high elasticity and high strength as compared with a resin material alone. Therefore, the fiber reinforced resin material is a material attracted in a broad field including an aerospace field, an automotive field, a civil-engineering and construction field, a sport equipment field, etc.

In order to utilize the high strength and high elasticity characteristics against tensile, which are the intrinsic properties of a reinforcing fiber, it might be preferable that a prepreg sheet material, i.e., a fiber reinforced resin sheet material, made by impregnating or semi-impregnating, in advance, a matrix resin into a fiber sheet material including a long-staple reinforcing fiber is prepared, and then the fiber reinforced resin sheet material is stacked in various directions to fabricate a molding.

On the other hand, the fiber reinforced resin material using a thermoplastic resin as the matrix resin is excellent in toughness, moldability, storage stability, recyclability, and the like due to the characteristics of the thermoplastic resin, so it is attracted as a value-added material and is expected as a material particularly in the automotive field.

However, a thermoplastic resin usually has a high viscosity as compared with a thermosetting resin, and therefore in molding the thermoplastic resin, the thermoplastic resin needs to be brought into a lower viscosity state in a high temperature state. Then, in this state, a step of impregnating or semi-impregnating the thermoplastic resin into a reinforcing fiber bundle constituting a fiber sheet material is needed.

Here, "impregnation" means that a molten thermoplastic resin enters a gap between the respective fibers in a reinforcing fiber bundle, resulting in a state where the thermoplastic resin is impregnated throughout the reinforcing fiber bundle. "Semi-impregnation" means a pre-stage state of the impregnation state, and a state where the thermoplastic resin is partially impregnated into the reinforcing fiber bundle but not yet perfectly impregnated throughout the reinforcing fiber bundle. In the semi-impregnation state, a portion where fibers not yet permeated with a thermoplastic resin concentrate is present in a reinforcing fiber bundle, and at the same time a portion of only resin is partially present also in the thermoplastic resin.

As the method for producing a fiber reinforced resin sheet material by impregnating a thermoplastic resin into a fiber sheet material, there are proposed; a method for pressing a thermoplastic resin film softened by a pair of metallic pressing rolls and thereby impregnating the same into a fiber sheet material (e.g., see Patent Literature 1); a method for using a metallic roll and a rubber covered roll and impregnating a thermoplastic resin into a fiber sheet material between these rolls (e.g., see Patent Literature 2) ; and the like. Moreover, there are proposed a method for impregnating a thermoplastic resin into a fiber sheet material while deforming a circumferential face of a metallic pressing roll by depressing the metallic pressing roll against a metallic main roll so that the circumferential face of the pressing roll follows the shape of the circumferential face of the main roll (e.g., see Patent Literature 3), and the like.
Another method for producing a fiber reinforced resin sheet material is known from Patent Literature 4.

Citation List

Patent Literature

PTL 1: Japanese Patent Laid-Open No. 07-016936
PTL 2: Japanese Patent Laid-Open No. 07-016835
PTL 3: Japanese Patent Laid-Open No. 2012-110935

PTL 4: Japanese Patent No JP H03 243309 A

## Summary of Invention

Technical Problem

These production methods are intended to produce a fiber reinforced resin sheet material, the methods including the steps of: sequentially conveying a fiber sheet material and a resin sheet material including a thermoplastic resin film and the like to a heating and pressing roll and cooling roll in a state where these materials are sandwiched between a pair of conveying belts or conveying sheets, the conveying belts or conveying sheets being fabricated from a release-treated raw material or a raw material having a releasing-effect; and impregnating and solidifying a molten thermoplastic resin into a reinforcing fiber bundle and thereby producing the fiber reinforced resin sheet material. Then, by peeling off the fiber reinforced resin sheet material from the conveying belt or conveying sheet after passing between the cooling rolls, the troubles such as follows are avoided: a trouble that a molten resin adheres to the heating and pressing roll, the cooling roll, or the like; a trouble that the reinforcing fiber adheres, together with the adherent resin, to wind around the heating and pressing roll, the cooling roll, or the like.

In Patent Literature 3, as illustrated in FIG. 2, using an extrusion molding apparatus and a T die, a thermoplastic resin film obtained from the T die is superimposed, as is, on a fiber sheet material.

In the above-described conventional molding methods, usually the width of the thermoplastic resin film is set similar to or a little wider than the width of the fiber sheet material. This depends on the presupposition that the product width of a fiber reinforced resin sheet material is obtained on the basis of the entire width of a fiber sheet material to be introduced.

The present inventors performed a continuous production, the production implementing a method comprising the steps of: superimposing a fiber sheet material including a plurality of reinforcing fiber bundles arranged in the width direction and a resin sheet material whose width is wider than the width of the fiber sheet material; sandwiching the resultant superimposed sheets in between a pair of conveying sheets fabricated from a raw material having a releasing-effect; in this state, introducing the resultant sandwiched sheets in between a pair of metallic heating-rolls and pressing the same while heating the same; after the above steps, causing this sandwiched sheets to travel in contact with a cooling roll and thereby peeling off the fiber reinforced resin sheet material from the conveying sheet; and directly winding the fiber reinforced resin sheet material around a paper tube as a product. However, there was a trouble that the resin sheet material arranged outside the both side ends of the fiber sheet material adheres, on some places, to the conveying sheet.

The present inventors have already developed a spreading technique for spreading a reinforcing fiber bundle of a carbon fiber or the like using fluid, and thus now are able to obtain a thin and wide fiber sheet material using such a spreading technique. Using a thin fiber sheet material fabricated using the spreading apparatus as illustrated in FIG. 12 of Japanese Patent No. 4813581, the present inventors continuously produced a fiber reinforced resin sheet material using, as with the conventional molding method, a method including the steps of: superimposing a fiber sheet material and a thin resin sheet material whose width is wider than the width of the fiber sheet material; sandwiching the resultant superimposed sheets in between a pair of conveying sheets fabricated from a raw material having a releasing-effect; and heating and pressing this sandwiched sheet by a pair of metallic heating rolls and cooling the same by a pair of cooling rolls. There was a trouble that the resin sheet material arranged outside the both side ends of the fiber sheet material continuously adhered to the conveying sheet and remained. This might be because the thickness of the resin sheet material also needs to be reduced with a reduction of the thickness of the fiber sheet material, and therefore the resin sheet material becomes thin, and in peeling off a fiber reinforced resin sheet material from a conveying sheet, a resin adhering to the conveying sheet is likely to be separated from the fiber reinforced resin sheet material and the resin continuously adheres to the conveying sheet.

The experiment performed by the present inventors confirmed that when the thickness per one sheet of resin sheet material was thinner than approximately 50 $\mu$m, the resin thinly adhered to the conveying sheet and was likely to be separated from a fiber reinforced resin sheet material, and that the resin continuously adhered to the conveying sheet.

Moreover, even when a resin sheet material is formed so as to have substantially the same width as the width of a fiber sheet material, and is superimposed on the fiber sheet material, and a fiber reinforced resin sheet material is produced by heating and pressing and cooling, there was a trouble that when the resin sheet material melted and was impregnated into the fiber sheet material, the resin melting outwards of the both side ends of the fiber sheet material protruded and adhered to the conveying sheet and remained.

In attempting to improve the productivity and obtain a low cost fiber reinforced resin sheet material, we wish to repeatedly use an expensive conveying sheet, but once a resin adheres to the surface of the conveying sheet, there is a problem that it takes a time and effort to remove this adherent resin and the production cost will increase.

In the continuous production using a conveying belt, once a resin adheres to the surface of the conveying belt, then when the adherent resin is heated again to become in a molten state, the viscosity of the resultant resin causes a new resin to adhere thereto, resulting in a trouble that the adhesion amount of the resin increases at this portion. Finally, when the resin adhering to the conveying belt is molten again, the reinforcing fiber of the fiber sheet material will adhere to the molten resin and be dragged, and a trouble is developed that the reinforcing fiber winds around the conveying belt.

Then, when the resin sheet material melts from the side end portion of the fiber sheet material and flows and expands in the width direction, the following troubles might be developed: the reinforcing fiber of the side end portion of the fiber sheet material also flows in the width direction due to the influence of the flow in the width direction of the resin and causes the alignment disorder of the reinforcing fiber; the reinforcing fiber which flowed out adheres to and winds around the conveying sheet or conveying belt together with the adhesion resin; and so on.

When a thermoplastic resin film is prepared using an extrusion molding apparatus and a T die, the molten resin is pushed out and discharged from the die having a slit-like lip, and is extended in a pulling-in flow direction and is molded in the shape of a film. At this time, although the resin pushed out in a molten state contracts in the thickness direction and in the width direction by being extended in the flow direction, the sheet thickness at the both side portions becomes thicker than the thickness at the center portion due to this contraction in the width direction.

If the thermoplastic resin film discharged from the T die is superimposed, as the resin sheet material, as is, on the fiber sheet material, the both ends of the resin sheet material will increase in thickness. Therefore, the state of impregnation into the fiber sheet material at the both side portions of the resin sheet material differs from the state of impregnation into the fiber sheet material at the center portion of the resin sheet material, and the impregnation will not proceed at the center portion. That is, the fiber reinforced resin sheet material results in a fiber reinforced resin sheet material having a different thickness and impregnation in the width direction. This tendency will strongly appear in particular in attempting to obtain a thin fiber reinforced resin sheet material.

The present invention has been made in view of the above circumstances, and is intended to provide a production method for a fiber reinforced resin sheet material, the method being capable of continuously and stably obtaining the fiber reinforced resin sheet material by using a resin sheet material and a fiber sheet material and melting the resin sheet material and impregnating or semi-impregnating the same into the fiber sheet material.

Solution to Problem

In order to solve the above-described problems, the invention provides a production method for a fiber reinforced resin sheet material as claimed in claim 1. A production method for a fiber reinforced resin sheet material according to the present invention includes: a superimposing step of conveying and superimposing a fiber sheet material and a resin sheet material; an integrating step of obtaining a composite sheet material by heating and pressing while conveying the superimposed fiber sheet material and resin sheet material and thereby melting the resin sheet material and impregnating or semi-impregnating and integrating the same into the fiber sheet material; and a solidifying step of solidifying a resin by cooling while conveying the composite sheet material and thereby forming the fiber reinforced resin sheet material.

In the production method for a fiber reinforced resin sheet material according to the present invention, in the superimposing step, a side end portion of the fiber sheet material is arranged outside a side end portion of the resin sheet material, and the fiber sheet material and the resin sheet material are superimposed. Furthermore, at least in the superimposing step to the solidifying step, the fiber sheet material is conveyed in a state where a tension is applied across the entire width thereof, and the composite sheet material and the fiber reinforced resin sheet material are conveyed in a state where a tension is applied across the entire width including a side end portion of the fiber sheet material where the resin sheet material is not impregnated or semi-impregnated into the fiber sheet material. Furthermore, the fiber sheet material includes a spread fiber bundle processed by a spreading method, the method including: a fluidly-spreading step of spreading the fiber bundle by moving the fiber bundle in a width direction while bending a fiber by causing fluid to pass through the fiber bundle; a longitudinal vibration applying step of repeatedly applying a change operation in which a part of the fiber bundle is pressed to become in a state of tension while causing a contact member to contact the fiber bundle to be conveyed, and then the contact member is spaced from the fiber bundle in the state of tension and temporarily setting the fiber bundle into a state of relaxation; and a lateral vibration applying step of reciprocatively vibrating, in the width direction, the fiber bundle having been spread. Furthermore, the areal weight of the spread fiber bundle is 10 g/m$^2$ to 80 g/m$^2$. Furthermore, in the integrating step, for the fiber sheet material including a plurality of fiber bundles or the spread fiber bundle arranged in the width direction, both side end portions of the resin sheet material are impregnated or semi-impregnated into the fiber bundle or spread fiber bundle arranged at an utmost side-end of the fiber sheet material. Furthermore, the average thickness in the width direction of the resin sheet material is 10 μm to 50 μm. Furthermore, the resin sheet material is formed so that a deviation of the thickness in the width direction from the average thickness thereof falls within ±10% of the average thickness. Furthermore, the resin sheet material introduced in the superimposing step is continuously formed by slitting both ends of a resin film while molding the resin film by extrusion molding. Furthermore, in the superimposing step, the resin sheet material is superimposed on one side of the fiber sheet material, and in the integrating step, the heating temperature on a side of the superimposed fiber sheet material is set equal to or higher than the melting temperature of the resin sheet material, and the heating temperature on a side of the superimposed resin sheet material is set lower than the melting temperature of the resin sheet material. Furthermore, in the superimposing step, the fiber sheet material is arranged on both sides of the resin sheet material. Furthermore, in the superimposing step, the fiber sheet material including a plurality of the fiber bundles or spread fiber bundles arranged in the width direction is shifted in the width direction so that the fiber bundles or the spread fiber bundles do not overlap with each other. Furthermore, in the superimposing step, both side end portions of the fiber sheet material arranged on both sides of the resin sheet material are arranged outside both side end portions of the resin sheet material. Furthermore, in the integrating step, the composite sheet material is heated and pressed so that the thickness thereof becomes thicker than the thickness in a state where the resin sheet material melts and is completely impregnated into the fiber sheet material.

Advantageous Effects of Invention

The production method for a fiber reinforced resin sheet material according to the present invention is capable of producing, continuously and in an excellent condition, a fiber reinforced resin sheet material including a resin sheet material impregnated or semi-impregnated into a fiber sheet material.

Brief Description of Drawings

FIG. 1 is a schematic perspective view of an apparatus implementing a method for producing a fiber reinforced resin sheet material by arranging a resin sheet material on one side of a fiber sheet material.
FIG. 2 is an explanatory view related to the arrangement of a fiber sheet material Ts and resin sheet material Js.
FIG. 3 is a schematic perspective view of an apparatus implementing a method for producing a fiber reinforced resin sheet material by arranging a resin sheet material on both sides of a fiber sheet material.
FIG. 4 is a schematic side view of an apparatus implementing a method for producing a fiber reinforced resin sheet material by arranging a fiber sheet material with respect to a resin sheet material which is produced using an extrusion molding apparatus and T die.
FIG. 5 is a schematic side view of an apparatus implementing a method for producing a fiber reinforced resin sheet material by arranging a fiber sheet material on both sides of a resin sheet material which is produced using an extrusion molding apparatus and T die.
FIG. 6 is an explanatory view related to the arrangement of fiber sheet materials TsA, TsB and a resin sheet material Js.
FIG. 7 is a schematic side view of another apparatus implementing a method for producing a fiber reinforced resin sheet material by arranging a fiber sheet material on both sides of a resin sheet material which is produced using an extrusion molding apparatus and T die.
FIG. 8A and 8B is an explanatory view related to a fiber reinforced resin sheet material Ps in a state where the fiber sheet materials TsA, TsB and the resin sheet material Js are arranged and impregnated with a resin.
FIG. 9 is a schematic side view of an apparatus for spreading a fiber bundle.
FIG. 10 is a schematic top view of the apparatus for spreading a fiber bundle.

Description of Embodiments

Hereinafter, the embodiments according to the present invention will be explained in detail. Note that, since the embodiments to be explained hereinafter are the preferable specific examples in implementing the present invention, various restrictions are technically set, but the present invention shall not be limited to these embodiments unless otherwise specifically stated in the description below.

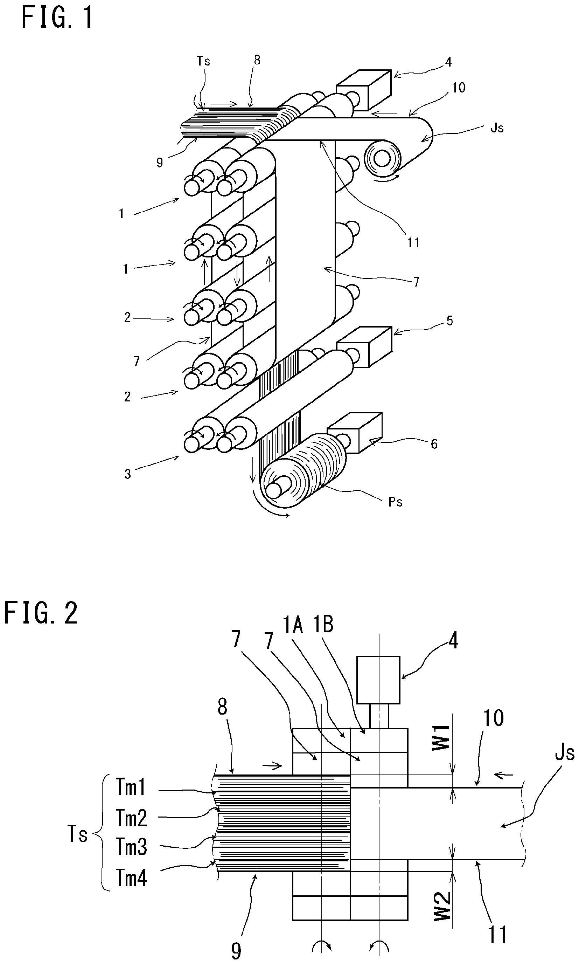

FIG. 1 is a schematic perspective view related to an exemplary apparatus implementing a production method for a fiber reinforced resin sheet material according to the present invention, and FIG. 2 is an explanatory view related to the arrangement of a fiber sheet material Ts and resin sheet material Js when the apparatus illustrated in FIG. 1 is seen from the upper side.
As illustrated in FIG. 2, the fiber sheet material Ts includes four fiber bundles Tm, each of which is pulled out by a certain tension from a plurality of bobbins set in a non-illustrated unwinding apparatus, arranged and aligned in the width direction. Since a tension is applied to four fiber bundles Tm, the fiber sheet material Ts is introduced into a heating roll 1A, with a tension applied across the entire width thereof. Although the number of fiber bundles Tm is four in FIG. 2, the number of fiber bundles Tm arranged in the width direction is determined by the width of a fiber reinforced resin sheet material Ps, the areal weight of the fiber bundle, etc. The production and the like of a tape-like fiber reinforced resin sheet material using one fiber bundle are possible.

Examples of the reinforcing fiber material used for the fiber bundle Tm include reinforcing fiber bundles, such as a carbon fiber bundle, a glass fiber bundle, an aramid fiber bundle, and a ceramic fiber bundle. In the case of the carbon fiber bundle, although the number of bundled fibers in a bundle ranging from 12,000 (12K) to 24, 000 (24K) is widely distributed in the market, a fiber bundle having the number of bundled fibers exceeding 24, 000, e.g., 48, 000 (48K), 50, 000 (50K), or 60, 000 (60K), can be used in the present invention.

After arranging a plurality of fiber bundles Tm at a predetermined interval in the width direction, these fiber bundles Tm may be formed in the form of a spread yarn sheet by the spread treatment of widely and thinly spreading these fiber bundles Tm, and be used as the fiber sheet material Ts. For the spread treatment, for example the spreading apparatus as illustrated in FIG. 12 described in Japanese Patent No. 4740131 may be used to spread a plurality of fiber bundles and fabricate a spread yarn sheet. Moreover, if the spreading apparatus as illustrated in FIG. 20 described in Japanese Patent No. 5326170 is used, a thin spread yarn sheet can also be obtained by gradually spreading a high fineness fiber bundle, e.g., a fiber bundle including a large number of bundled fibers, such as a carbon fiber bundle 24K or 50K. Furthermore, if the spreading apparatus as illustrated in described in Japanese Patent No. 5553074 is used, wide spreading can be realized at high speed.

Note that, as the form of the fiber bundle Tm, a fiber bundle which does not use a binder, such as a sizing agent, may be used, or a reinforcing fiber bundle may be used which is bound by a binder, such as a sizing agent, so that each fiber will not spread. If a fiber bundle with a sizing agent applied thereto is spread and thinned, even in a spread yarn sheet the form thereof will stabilize due to the adhesion of the sizing agent. In a forcibly-twisted fiber bundle, a continuous spread state is difficult to be obtained and it becomes difficult to obtain a spread yarn sheet excellent in fiber dispersibility.

Note that, a textile sheet material, knitting sheet material, or the like including a reinforcing fiber bundle may be used for the fiber sheet material Ts.

If the above-described spreading apparatus is used, for example, in a carbon fiber bundle or the like, a wide and thin spread yarn (spread fiber bundle) of the areal weight in a range of 10 to 80 g/m$^2$ can be produced. In the case where a carbon fiber bundle 12K (the single-yarn diameter is approximately 7 $\mu$m, the number of bundled fibers is 12, 000) is used, if spread to the width of 20 mm, a spread fiber bundle of the areal weight of approximately 40 g/m$^2$ can be obtained, if spread to the width of 40 mm, the a spread fiber bundle of the areal weight of approximately 20 g/m$^2$ can be obtained, and if spread to the width of 64 mm, a spread fiber bundle of the areal weight of approximately 12.5 g/m$^2$ can be obtained. In the case where a carbon fiber bundle 50K (the single-yarn diameter is approximately 7 $\mu$m, the number of bundled fibers is 50,000) is used, if spread to the width of 42 mm, a spread fiber bundle of the areal weight of approximately 78 g/m$^2$ can be obtained, and if spread to the width of 82 mm, a spread fiber bundle of the areal weight of approximately 40 g/m$^2$ can be obtained. Then, by arranging fiber bundles in the width direction and at the same time spreading the same, a spread yarn sheet including a plurality of spread fiber bundles arranged in the width direction can be obtained.

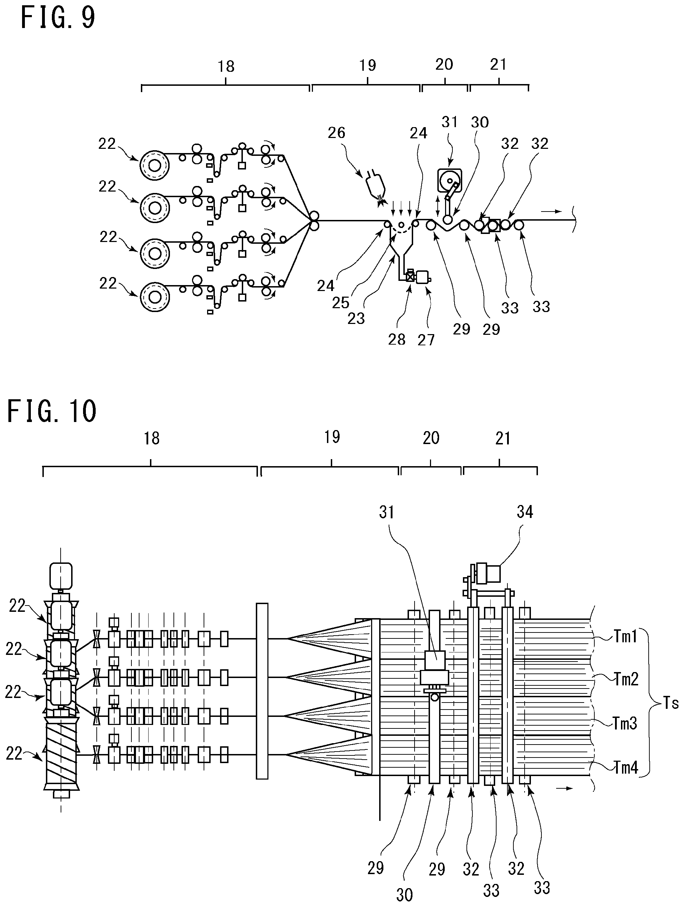

The above-described spreading apparatus includes a mechanism for performing at least the fluidly-spreading step, longitudinal vibration applying step, and lateral vibration applying step, and is capable of widely and thinly spreading a bent fiber bundle by causing a fluid flowing in one direction to act, and applying a lateral vibration to each spread fiber bundle, thereby obtaining a spread yarn sheet without a gap. FIG. 9 and FIG. 10 illustrate a basic exemplary spreading apparatus, including: a feed mechanism 18 for feeding a fiber bundle; a fluidly-spreading mechanism 19 for performing the fluidly-spreading step of spreading a fiber bundle by moving the fiber bundle in a width direction while bending a fiber by causing fluid to pass through the fiber bundle; a longitudinal vibration applying mechanism 20 for performing the longitudinal vibration applying step that repeatedly applies a change operation of pressing a part of the fiber bundle to become in a state of tension while causing a contact member to contact the fiber bundle to be conveyed, and then spacing the contact member from the fiber bundle in the state of tension and temporarily setting the fiber bundle into a state of relaxation; and a lateral vibration applying mechanism 21 for performing the lateral vibration applying step of reciprocatively vibrating a spread fiber bundle in the width direction.

In the feed mechanism 18, a plurality of bobbins 22, around each of which a fiber bundle is wound, is set so as to be able to feed a plurality of fiber bundles to the spreading step with a certain tension and at an interval corresponding to a spread width. Moreover, the fluidly-spreading mechanism 19 includes: a guide roll 24; a wind tunnel pipe 23; a bend securing roll 25; a hot air generation blower 26; an air suction blower 27; and a suction amount adjusting valve 28, wherein the guide roll 24 is provided in the front and rear of an upper opening portion of the wind tunnel pipe 23, the bend securing roll 25 is provided inside the upper opening portion, the hot air generation blower 26 is provided above the opening portion, and the wind tunnel pipe 23 includes the air suction blower 27 and suction amount adjusting valve 28 linked. Then, the longitudinal vibration applying mechanism 20 includes: a pressing roll 30 serving as a contact member; a pair of support rolls 29; a pressing roll 30; and a drive motor 31, in which the pressing roll 30 is arranged between the pair of support rolls 29 and moves up and down by the rotational drive of the drive motor 31.

In the longitudinal vibration applying mechanism 20, the pressing roll 30 repeatedly moves up and down so that the pressing roll 30 serving as a contact member is struck, at a predetermined cycle, against the upper face of a fiber bundle passing through the upper side of the support roll 29. When the pressing roll 30 is struck against the fiber bundle and pressed in between the support rolls 29, the tension of the fiber bundle will temporarily increase to cause a state of tension, while when the pressing roll 30 moves up and separates from the fiber bundle, the tension of the fiber bundle will decrease to cause a state of relaxation.

Such repeat of the state of tension and state of relaxation of a fiber bundle propagates also to a fiber bundle in the fluidly-spreading mechanism 19 and the bend amount of the fiber bundle temporally varies in the wind tunnel pipe 23. That is, in the wind tunnel pipe 23, if a fiber bundle is tensed, the bend amount of the fiber bundle decrementally varies, while if a fiber bundle is relaxed, the bend amount of the fiber bundle incrementally varies. In a state where a fiber bundle is periodically repeating an incremental change and decremental change of the bend amount thereof, if the fiber bundle receives an action of the fluid (air in the case of this apparatus) flowing in one direction whose flow rate is adjusted by the air suction blower 27 and suction amount adjusting valve 28, each fiber will move in the width direction in a more straight state, so that the spreading which is wider and more excellent in fiber dispersibility is performed.

Since a fiber bundle in a bending state receives the action of the fluid flowing in one direction, even if a spread state occurs, in which a gap is generated between fibers due to the influence of a sizing compound, the entanglement of fibers, or the like, the flow velocity of the fluid flowing through the gap will increase and the static pressure of the fluid flowing through this gap will decrease and as the result the fiber causes an action of attempting to return to the gap and attempts to maintain a spread state excellent in dispersibility of the fibers.

Due to the bend securing roll 25 inside the opening portion above the wind tunnel pipe 23, the spread fiber bundle does not become linear in the wind tunnel pipe 23, so the spread width of a fiber bundle is prevented from shrinking. Furthermore, if the bend amount of a fiber bundle decreases and the fiber bundle instantaneously contacts the bend securing roll 25 due to the longitudinal vibration applying mechanism, the dispersibility and straightness of each fiber in the spread fiber bundle will improve, so that a high-quality spread state can be obtained. That is, a fiber bundle in the state of relaxation forms a bend away from the bend securing roll 25, and while in the state of tension, the fiber bundle forms a bend which instantaneously contacts the bend securing roll 25. By repeating these two states, a fiber bundle is subjected to the spreading which is wide and excellent in fiber dispersibility.

In this exemplary spreading apparatus, the hot air generation blower 26 is provided above the opening portion of the wind tunnel pipe 23 so as to be able to blow a hot air to a fiber bundle and heat the same. By heating a fiber bundle to be spread, the sizing agent adhering to the fiber bundle can be softened. Thus, the fiber can be easily unraveled and the fiber can be uniformly distributed.

For a plurality of spread fiber bundles to be arranged in parallel in the width direction, the lateral vibration applying mechanism 21 for applying a reciprocating vibration in the width direction is provided. The lateral vibration applying mechanism 21 includes a plurality of vibrating rolls 32 in contact across the entire width on the upper side of a plurality of spread fiber bundles, and includes a plurality of support rolls 33 in contact across the entire width on the lower side of the plurality of spread fiber bundles, in which these vibrating rolls 32 and support rolls 33 are arranged in zigzags. Then, the vibrating roll 32 is linked with a crank mechanism, and by causing the drive motor 34 to drive the crank mechanism, the vibrating roll 32 is reciprocated in the width direction of the spread fiber bundle. Due to this reciprocation of the vibrating roll 32, each fiber is further unraveled in the width direction to improve the dispersibility, and at the same time the generation of a gap between the spread fiber bundles can be prevented, and a spread yarn sheet more excellent in fiber dispersibility can be obtained.

Each fiber bundle (the fiber bundle Tm1 to fiber bundle Tm4 in FIG. 9 and FIG. 10) is given a certain tension in the feed mechanism 18 and is pulled out from a bobbin. Then, a fiber sheet material including the spread fiber bundle passing through the fluidly-spreading mechanism 19, longitudinal vibration applying mechanism 20, and lateral vibration applying mechanism 21 is given a certain tension across the entire width thereof, and is introduced, in a state where this tension is applied, into the superimposing step which is the next step.

A spread yarn sheet, which is obtained by the spreading apparatus provided with at least the fluidly-spreading mechanism 19, longitudinal vibration applying mechanism 20, and lateral vibration applying mechanism 21, results in a sheet material excellent in fiber dispersibility across the entire width of the spread yarn sheet and having a non-continuous gap between fibers. Therefore, feeding the spread yarn sheet as the fiber sheet material Ts enables to obtain a high-quality fiber reinforced resin sheet material.

Note that, in this exemplary spreading apparatus, the spreading apparatus includes only one fluidly-spreading mechanism 19, one longitudinal vibration applying mechanism 20, and one lateral vibration applying mechanism 21, but it may include a plurality of fluidly-spreading mechanisms 19, longitudinal vibration applying mechanisms 20, and lateral vibration applying mechanisms 21 depending on the spread width and processing speed to obtain.

In the spread fiber bundle, the average number of single yarns arranged in the thickness direction may decrease to be equal to or less than ten. For example, when the carbon fiber bundle 12K is spread in the width of 16 mm with a uniform dispersibility of fibers, the maximum number of single-yarns arranged in the width direction may be approximately 2, 286 by calculation of 16 mm/0.007 mm (diameter of a carbon fiber). However, since the arrangement of single-yarns causes a gap, approximately 1,500 to 2,000 single-yarns may be arranged in the width direction. Approximately six to eight single-yarns may be arranged in the thickness direction because of 12K (12,000). Similarly, when the carbon fiber bundle 12K is spread in the width of 20 mm, approximately 2, 000 to 2, 500 single-yarns may be arranged in the width direction and approximately four to six single-yarns may be arranged in the thickness direction, while when spread in the width of 40 mm, approximately 5,000 to 5,500 single-yarns may be arranged in the width direction and approximately two to three single-yarns may be arranged in the thickness direction. Furthermore, when the carbon fiber bundle 50K is spread in the width of 42 mm, approximately eight to ten single-yarns may be arranged in the thickness direction.

When a fiber bundle which is spread, i.e., a spread fiber bundle, is used, the number of single-yarns arranged in the thickness direction decreases, and therefore as compared with a thermosetting resin, such as an epoxy resin, even in a thermoplastic resin having high viscosity, the impregnation of the thermoplastic resin in between single-yarns becomes smoother, and a high-quality fiber reinforced resin sheet material can be obtained with a shorter heating and pressing time.

In FIG. 1, the resin sheet material Js is a continuous sheet-like or film-like one, and is pulled out from the bobbin set in an unwinding apparatus.

The material used for the resin sheet material Js is a thermoplastic resin material. Polypropylene, polyethylene, polystyrene, polyamide (nylon 6, nylon 66, nylon 12, etc.), polyacetal, polycarbonate, acrylonitrile-butadiene-styrene copolymer (ABS), polyethylene terephthalate, polybutylene terephthalate, polyether imide, polyether sulphone, polyphenylene sulfide, polyether ketone, polyether ether ketone, or the like is used. Moreover, a resin made by combining two or more of these thermoplastic resins into a polymer alloy may be used.

Note that, a textile sheet material, knitting sheet material, nonwoven fabric, or the like including a fiber made from a thermoplastic resin material may be used for the resin sheet material Js.

In the apparatus illustrated in FIG. 1, the following sets are continuously arranged at a certain interval from the upstream side toward the downstream side: two sets of mechanisms each including a pair of heating rolls 1 as a mechanism section configured to heat and press; and two sets of mechanisms each including a pair of cooling rolls 2 as a mechanism section configured to cool and press. Then, a pair of two conveying belts 7 with a tension applied thereto travel between the above-described rolls. This apparatus is capable of continuously producing the fiber reinforced resin sheet material Ps obtained by: superimposing the fiber sheet material Ts and the resin sheet material Js; sandwiching these materials between the conveying belts 7 and conveying the same; heating and pressing these materials between the heating rolls 1; and then cooling and pressing the resulting material between the cooling rolls 2 and thereby melting and impregnating or semi-impregnating the resin sheet material Js into the fiber sheet material Ts. Then, the fiber reinforced resin sheet material Ps sandwiched between the conveying belts 7 which is discharged from the cooling roll 2 can be peeled off from the conveying belt 7 and wound around the bobbin while being pulled in by a pull-in roll 3.

In this example, a superimposing step is performed, in which the fiber sheet material Ts and resin sheet material Js are superimposed by being introduced in between the heating rolls 1 on the upstream side and being sandwiched by the conveying belts 7. An integrating step is performed, in which a composite sheet material is obtained by heating and pressing the superimposed fiber sheet material Ts and resin sheet material Js by the heating roll 1 while being sandwiched by the conveying belts 7, and thereby melting and impregnating or semi-impregnating and integrating the resin sheet material Js into the fiber sheet material Ts. A solidifying step is performed, in which a composite sheet material including the integrated fiber sheet material Ts and resin sheet material Js is cooled by the cooling roll 2 while being sandwiched by the conveying belts 7, and the resin thereof is solidified so as to form a fiber reinforced resin sheet material. The formed fiber reinforced resin sheet material Ps will be peeled off from the conveying belt 7 by being conveyed while a tension is applied across the entire width of the fiber reinforced resin sheet material Ps by the pull-in roll 3.

In this example, the fiber sheet material Ts and resin sheet material Js introduced into the heating roll 1 on the upstream side are heated by being conveyed while contacting the heating roll 1 via the conveying belt 7. The heated fiber sheet material Ts and resin sheet material Js are introduced in between the relevant heating rolls 1, where the following steps are performed: the superimposing step and the integrating step of obtaining a composite sheet material by melting the resin sheet material Js in the superimposed fiber sheet material Ts and resin sheet material Js and impregnating or semi-impregnating the resin sheet material Js into the fiber sheet material Ts. Then, the heated fiber sheet material Ts and resin sheet material Js are introduced in between the heating rolls 1 on the downstream side, where the integrating step is performed once again.

In this example, since the heating roll 1 on the upstream side is heated, the superimposing step of superimposing the fiber sheet material Ts and resin sheet material Js and the integrating step of obtaining a composite sheet material are performed with the heating roll 1. However, for example, when the heating roll 1 on the upstream side is a rotating roll which does not heat, only the superimposing step of superimposing the fiber sheet material Ts and resin sheet material Js is performed with the rotating roll, and then the integrating step of integrating the superimposed fiber sheet material Ts and resin sheet material Js is performed with the heating roll 1 on the downstream side.

In FIG. 1, the number of mechanisms each including a pair of heating rolls 1 and the number of the mechanisms each including a pair of cooling rolls 2 are two, respectively, but it may be one, or three or more sets of the mechanism may be continuously provided. As the number of sets increases, the heating time and cooling time can be increased and the speed of continuous processing can be increased.

Moreover, although not illustrated, the degree of impregnation of the molten resin into the fiber sheet material Ts between the second set of heating rolls may be increased by providing a mechanism for heating, from the both sides thereof, a pair of conveying belts 7 travelling between two sets of heating rolls, heating the entire surfaces of the fiber sheet material Ts and resin sheet material Js sandwiched by the conveying belts 7, and maintaining the molten state of the resin sheet material. Note that, a hot air blowing mechanism, a direct heating mechanism with a heating plate, or the like can be provided as the heating mechanism.

Furthermore, although not illustrated, a mechanism for cooling a pair of travelling conveying-belts 7 from both sides thereof may be provided between the second set of heating rolls and the subsequent set of cooling rolls and between two sets of cooling rolls so as to cool the entire surface of the molten resin impregnated or semi-impregnated into the fiber reinforced resin sheet material sandwiched by the conveying belts 7. This results in a reduction in the time required for cooling and solidifying the molten resin and the production can be performed at higher speed. Note that, a cold air blowing mechanism, a direct cooling mechanism with a water-cooled or air-cooled cold plate, or the like can be provided as the cooling mechanism.

In the apparatus illustrated in FIG. 1, a drive motor 4 is set to one (heating roll 1B in FIG. 2) of the first set of heating rolls 1, and the processing speed is set by controlling the rotation of the heating roll. Then, another heating roll (heating roll 1A in FIG. 2) is pressed against one of the heating rolls (heating roll 1B in FIG. 2) with a pressing apparatus, such as a non-illustrated air cylinder or oil hydraulic cylinder to superimpose and sandwich the fiber sheet material Ts and resin sheet material Js introduced in between the heating rolls 1. As illustrated in FIG. 2, in this example the width of the fiber sheet material Ts is set so as to be wider than the width of the resin sheet material Js, and the both sheet materials are superimposed, with the both side end portions of the fiber sheet material Ts arranged outside the both side end portions of the resin sheet material Js.

Then, by being pressed and heated by the heating roll 1 between the conveying belts 7, the fiber sheet material Ts and molten resin sheet material Js are pressed to continuously impregnate or semi-impregnate and integrate the molten resin into the fiber sheet material Ts and form a composite sheet material. In the composite sheet material, the both side end portions of the fiber sheet material Ts are arranged outside the both side end portions of the resin sheet material Js, so the resin sheet material Js will be reliably held inside the fiber sheet material Ts without protruding outward from the both side end portions of the fiber sheet material Ts in melting.

Through the solidifying step performed with the second set of cooling rolls 2, the fiber reinforced resin sheet material Ps with a resin impregnated or semi-impregnated into the fiber sheet material Ts is obtained, but a fiber sheet portion, into which a resin is not impregnated or semi-impregnated, is present in the both side end portions of the fiber reinforced resin sheet material Ps. Then, with the pull-in roll 3 set in the drive motor 5, the fiber reinforced resin sheet material Ps is nipped across the entire width thereof including the fiber sheet portion of both side end portions, and is then pulled with a tension applied across the entire width of the sheet material so as to be peeled off from the conveying belt 7.

In this example, by introducing the fiber sheet material Ts with a tension applied across the entire width thereof, and by causing the conveying belts to travel with a tension applied thereto, and by pulling the fiber reinforced resin sheet material Ps with a tension applied across the entire width of the fiber reinforced resin sheet material Ps and the fiber sheet materials of the both side end portions, the fiber reinforced resin sheet material can be caused to travel, with a tension applied across the entire width including the side end portions of the fiber sheet material which do not overlap with the resin sheet material from the superimposing step through the solidifying step.

Between the heating rolls 1, the composite sheet material is conveyed with a tension applied across the entire width including the fiber sheet materials of the both side ends thereof. Therefore, even if the molten resin flows in the width direction in the both side end portions of the composite sheet material, the arrangement of the fiber sheet material Ts will be maintained without being disrupted.

The fiber reinforced resin sheet material Ps pulled out by the pull-in roll 3 can be wound around a core material, such as a paper tube, with a winding apparatus having a drive motor 6 set therein. Moreover, by removing, after being discharged from the pull-in roll 3, only the fiber sheet portions of the both side end portions thereof with an apparatus (not illustrated) which continuously slits the same, the fiber reinforced resin sheet material Ps can also be wound around the core material with a winding apparatus.

When the fiber reinforced resin sheet material Ps having passed through the step of the cooling roll 2 is directly wound around the core material without using the pull-in roll 3, the thickness of the center portion containing the resin of the fiber reinforced resin sheet material Ps differs from the thickness of the fiber sheet portions of the both side end portions which do not contain the resin. Therefore, as winding proceeds and the winding diameter increases, a tension will be applied to the center portion of the fiber reinforced resin sheet material Ps, while a tension will not be applied to the fiber sheet portion of both side end portions, resulting in a relaxed state. If the fiber sheet portion is conveyed in a relaxed state, the following trouble is likely to occur: a fiber adheres to and is wound around the conveying belt 7 by the influence of a sizing compound adhering to a fiber etc. Once a fiber winds around the conveying belt 7, the continuous production becomes difficult.

Therefore, in the continuous production using a conveying belt, until the fiber reinforced resin sheet material formed in the solidifying step is peeled off from the conveying belt, the fiber reinforced resin sheet material is preferably caused to travel, with a tension applied across the entire width including the fiber sheet portions of both side end portions thereof.

Note that, when the fiber reinforced resin sheet material Ps is introduced, as is, into a slit apparatus and the fiber sheet portions of both side end portions are continuously slitted, the slitted and separated fiber reinforced resin sheet material and fiber sheet portion are wound with a tension applied thereto, respectively, so that the fiber reinforced resin sheet material Ps can be caused to travel while maintaining the state where a tension is applied across the entire width including the fiber sheet portions of both side end portions thereof in peeling off the fiber reinforced resin sheet material Ps from the conveying belt.

In the apparatus illustrated in FIG. 1, a method for nipping the fiber reinforced resin sheet material Ps including the fiber sheet portions of both side end portions thereof with the pull-in roll 3 and conveying the nipped fiber reinforced resin sheet material Ps, with a tension applied across the entire width thereof is capable of applying a substantially uniform tension across the entire width of the sheet. Therefore, the fiber reinforced resin sheet material can stably travel without a wrinkle or the like being introduced thereinto. Then, in winding the fiber reinforced resin sheet material around a core material or the like, winding can be performed without irregular winding and the like and in a high quality state.

In the apparatus illustrated in FIG. 1, a pair of conveying belts 7 are set to sandwich the fiber sheet material Ts and resin sheet material Js, and cooling and pressing are performed after heating and pressing. A metal belt, a release-treated metal belt, a belt fabricated from a raw material which does not melt at the melting temperature of the resin sheet material Js and which has a release effect, or the like is used for the conveying belt 7. The examples of the release-treated metal belt include a stainless and thin belt having a silicone-coated or fluorine-coated surface, and the like. The examples of a belt fabricated from a raw material having a release effect include a belt made from a glass cloth coated with fluorine, which can be used up to the heating temperature of approximately 280°C. Moreover, as another raw material, there is a belt made from a polyimide resin, and this belt can be used up to the heating temperature of approximately 400°C.

Although the conveying belt 7 is used in the apparatus illustrated in FIG. 1, meandering and the like may be generated when the conveying belt rotates. Therefore, a meandering prevention apparatus (not illustrated) or the like for the belt may be provided to enable stable and continuous travel.

Although the conveying belt is used in the apparatus of FIG. 1, a mechanism may be provided for inserting a conveying sheet from a heating roll and discharging and winding the same from the second set of cooling rolls. As the conveying sheet, for example a sheet made from a glass cloth coated with fluorine, a polyimide resin film, or the like can be used.

Note that the examples of other heating and pressing apparatuses include the apparatus as illustrated in FIG. 1 described in Japanese Patent No. 3876276. This apparatus includes a plurality of vertical pairs of blocks arranged, and is divided into a pre-heating zone, actual heating and pressing zone, and cooling and pressing zone from the upstream side.

Moreover, the examples of other heating and pressing apparatuses include the apparatus illustrated in FIG. 1 described in Japanese Patent No. 06-75800 and the apparatus illustrated in FIG. 1 described in Japanese Patent Laid-Open No. 2014-221490. These apparatuses are capable of sandwiching a fiber sheet material and resin sheet material between endless pressing belts, and heating and pressing and then cooling and pressing in a conveying step.

These apparatuses are also capable of sandwiching a fiber sheet material and resin sheet material between conveying belts or conveying sheets and producing a fiber reinforced resin sheet material through the heating and pressing step and the cooling and pressing step.

When the fiber sheet material Ts and resin sheet material Js are introduced into these heating and pressing apparatuses, the side end portion of the fiber sheet material Ts is arranged outside the side end portion of the resin sheet material Js. In FIG. 2, one side end portion 8 of the fiber sheet material Ts is continuously arranged by a length W1 outward from one side end portion 10 of the resin sheet material Js, while another side end portion 9 of the fiber sheet material Ts is continuously arranged by a length W2 outward from another side end portion 11 of the resin sheet material Js. By heating and pressing in such an arrangement, the resin sheet material Js is turned into a molten resin and is impregnated or semi-impregnated into the fiber sheet material Ts. After the molten resin is solidified with the cooling roll, the fiber reinforced resin sheet material Ps is peeled off from the conveying belt or conveying sheet and is wound.

We need to secure lengths W1 and W2 such that the molten resin will not protrude from the both side end portions of the fiber sheet material Ts in the integrating step of producing the fiber reinforced resin sheet material Ps.

Under the processing conditions of setting at least the heating temperature, pressing force, and production speed to the same as the processing conditions for producing the fiber reinforced resin sheet material Ps, the followings actions are needed: the resin sheet material Js having the same width as the fiber sheet material Ts is introduced, and the superimposing step, integrating step, and then the solidifying step are performed, and then a length L by which the molten resin expands in the width direction from the side end portion of the introduced resin sheet material Js is obtained and the side end portion of the fiber sheet material Ts is arranged by at least the length L outward from the side end portion of the resin sheet material Js.

Furthermore, in the continuous production, the width of the fiber sheet material Ts and the width of the resin sheet material Js may fluctuate and the introduction position of the fiber sheet material Ts and the introduction position of the resin sheet material Js may fluctuate, so the lengths W1 and W2 are preferably set equal to or greater than a length obtained by adding to the length L the fluctuation amount thereof to be taken into consideration.

If in this arrangement the resin sheet material Js is turned into a molten resin and is impregnated or semi-impregnated into the fiber sheet material Ts, the entire surface of the resin sheet material Js is impregnated or semi-impregnated into the fiber sheet material Ts. Therefore, continuous adhesion of only the molten resin to the conveying belt or conveying sheet is eliminated.

If the adhesion of the molten resin to the conveying belt 7 occurs and remains, a trouble is likely to occur, in which the reinforcing fiber constituting the fiber sheet material Ts adheres to the molten resin and winds around the conveying belt 7. Moreover, the molten resin easily adheres to the resin portion adhering to the conveying belt 7, and the adhesion amount of the resin will increase. The resin portion with the increased adhesion amount of resin will increase in thickness, and due to this influence, the pressing force to the fiber sheet material Ts and molten resin sheet material Js will not be sufficiently loaded, and the impregnation state becomes worse with the lapse of time in the production of the continuous fiber reinforced resin sheet material Ps.

By arranging the side end portion of the fiber sheet material outside the side end portion of the resin sheet material, the adhesion of the resin to the conveying belt can be prevented, the trouble of winding of the fiber around the conveying belt is prevented, and the fiber reinforced resin sheet material can be continuously obtained in a stable impregnation state.

Moreover, when the production using a conveying sheet instead of a conveying belt is performed, the adhesion of the resin to the conveying sheet is prevented so as to be able to repeatedly use the conveying sheet, as is, resulting in a reduction in production cost.

When the fiber sheet material Ts includes a plurality of fiber bundles Tm (Tm1, Tm2, Tm3, Tm4 in FIG. 2) arranged and aligned in the width direction, the fiber reinforced resin sheet material Ps strengthened in one direction can be obtained. At this time, the fiber sheet material Ts and resin sheet material Js are arranged so that the both ends of the resin sheet material Js are always impregnated or semi-impregnated into the fiber bundle Tm (Tm1 and Tm4 in FIG. 2) located at the both side ends of the fiber sheet material Ts.

When the resin sheet material Js is not impregnated into the fiber bundle Tm (Tm1 and Tm4 in FIG. 2) located at the both side ends of the fiber sheet material Ts, this fiber bundle Tm (Tm1 and Tm4 in FIG. 2) is likely to be separated from the fiber reinforced resin sheet material Ps integrated as a sheet. Therefore, this fiber bundle (Tm1 and Tm4 in FIG. 2) easily wind around the conveying belt, roll, or the like. Moreover, when winding, as a product, the fiber reinforced resin sheet material Ps around a core material, such as a bobbin, the fiber bundles at both side ends are likely to twine and the fiber reinforced resin sheet material Ps may not be able to be unwound from the core materials, such as a bobbin.

In the case of a fiber sheet material including a plurality of fiber bundles arranged in the width direction, the fiber reinforced resin sheet material is produced by impregnating or semi-impregnating the both side end portions of the resin sheet material into the fiber bundle located at the both side ends of the fiber sheet material, so that twining of a fiber bundle of the fiber reinforced resin sheet material end portion to the conveying belt and/or roll can be prevented, and the fiber reinforced resin sheet material wound around the core materials, such as a bobbin, can be smoothly unwound therefrom.

Note that, for the fiber bundle Tm, a spread fiber bundle can also be used as described above. Moreover, for the fiber bundle, a fiber bundle with a sizing agent applied thereto is preferably used. The application of a sizing agent stabilizes the form of a fiber bundle and therefore further prevents the fiber bundle from twining to the conveying belt and/or roll. Furthermore, unwinding of the fiber reinforced resin sheet material wound around the core material, such as a bobbin, can be more smoothly performed.

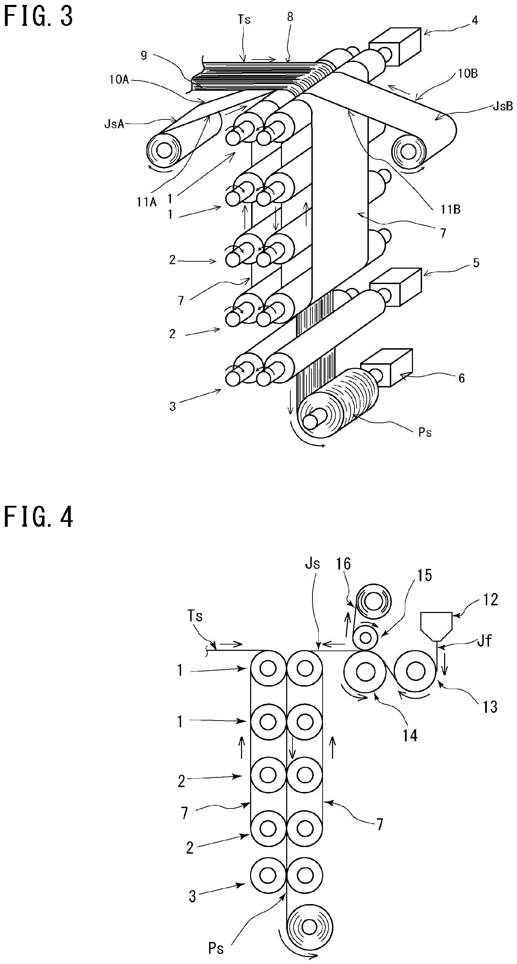

FIG. 3 is a schematic perspective view related to an exemplary apparatus for producing the fiber reinforced resin sheet material Ps by arranging resin sheet materials JsA, JsB on both sides of the fiber sheet material Ts and heating and pressing the same. Also in this case, the resin sheet materials JsA, JsB are superimposed on the fiber sheet material Ts by arranging the side end portion of the fiber sheet material Ts outside the side end portion of the resin sheet materials JsA, JsB. Specifically, the side end portion 8 of the fiber sheet material Ts is arranged outside a side end portion 10A of the resin sheet material JsA and a side end portion 10B of the resin sheet material JsB, and the side end portion 9 of the fiber sheet material Ts is arranged outside a side end portion 11A of the resin sheet material JsA and a side end portion 11B of the resin sheet material JsB. By arranging and superimposing in this manner, in the integrating step when the entire surface of each of the resin sheet materials JsA, JsB is melted and impregnated or semi-impregnated into the fiber sheet material Ts, continuous adhesion of only the molten resin to the conveying belt or conveying sheet can be prevented.

The thickness of the resin sheet material Js used for the exemplary apparatuses of FIG. 1 to FIG. 3 becomes thinner as the fiber sheet material Ts has a lower areal weight, i.e., thinner layer. For example, when the fiber sheet material Ts made from a carbon fiber is prepared with the areal weight of approximately 40 g/m$^2$ using the apparatus of FIG. 1, and if the fiber reinforced resin sheet material Ps whose fiber volume content Vf ranges from approximately 30 to 60% is attempted to be obtained, the thickness per one sheet of resin sheet material Js will range from approximately 14 to 52 $\mu$m. Moreover, when the fiber sheet material Ts made from a carbon fiber is prepared with the areal weight of approximately 60 g/m$^2$ using the apparatus of FIG. 3, and if the fiber reinforced resin sheet material Ps whose fiber volume content Vf ranges from approximately 30 to 60% is attempted to be obtained, a total thickness of two sheets of the resin sheet materials JsA, JsB will range from approximately 22 to 78 $\mu$m. Therefore, the thickness per one sheet when the resin sheet materials JsA, JsB have the same thickness will range from approximately 11 to 39 $\mu$m.

By arranging the side end portion of the fiber sheet material Ts outside each of the side end portions of the resin sheet material Js even if the thickness of the resin sheet material Js is thin, continuous adhesion of only a thinned resin portion to the conveying belt or conveying sheet when the entire surface of the resin sheet material Js is impregnated or semi-impregnated into fiber sheet material Ts can be prevented.

The deviation of the thickness in the width direction of the resin sheet material Js from an average thickness is preferably within ±10% of the average thickness. If the variation in thickness increases in the width direction of the resin sheet material, in the heating and pressing apparatus, due to the influence of a thick portion a pressing force to the fiber sheet material Ts and molten resin sheet material Js in the thin portion will not be sufficiently loaded, so that the impregnation state will vary in the production of the obtained fiber reinforced resin sheet material Ps. Moreover, if the pressing force concentrates on the molten resin of a thick portion and the flowability of the molten resin increases, meandering of the fiber around this thick portion will be caused, and the fiber volume content (Vf) significantly varies in the width direction, resulting in a degradation of quality.

When a thermoplastic resin film is used as the resin sheet material Js, as the results of measuring the thickness in the width direction of a commercially available thermoplastic resin film, the average thickness in a certain width direction was 16.4 $\mu$m and the variation in the thickness in the width direction was 15 to 18 $\mu$m, in the case of a PEI film of a nominal thickness 15 $\mu$m. Since ±10% of the average thickness is 14.8 $\mu$m to 18.0 $\mu$m, this thickness is within the allowable range. Moreover, in the case of a PA6 film of a nominal thickness 20 $\mu$m, the average thickness in a certain width direction was 20.7 $\mu$m and the variation in the thickness in the width direction was 20 to 22 $\mu$m. Since ±10% of the average thickness is 18.6 $\mu$m to 22.8 $\mu$m, this thickness is within the allowable range. In the case of a PP film of a nominal thickness 30 $\mu$m, the average thickness in a certain width direction was 31.4 $\mu$m and the variation in the thickness in the width direction was 29 to 32 $\mu$m. Since ±10% of the average thickness is 28.3 $\mu$m to 34.5 $\mu$m, this thickness is within the allowable range. Therefore, even when a commercially available thermoplastic resin film is used, the deviation of the thickness in the width direction of the resin sheet material from an average thickness can be set within ±10% of the average thickness. Note that an external micrometer or the like with the minimum display scale of 0.001 mm can be used in measuring the thickness.

Note that, in obtaining the thickness of a resin sheet material, the thickness can be obtained by measurement using an external micrometer with the minimum display scale of 0.001 mm but there is also a method for obtaining the thickness by calculation after measuring the weight. For example, the thickness can be calculated as follow: a sheet material of a certain size is cut out from a resin sheet material, the weight thereof is measured, the volume is obtained by dividing this weight by a specific gravity, and then this volume is divided by the area of the cut-out sheet material. For example, in the case of the PA6 film with a nominal thickness 20 $\mu$m and the width of 300 mm, when a square sheet raw material of 30 mm × 30 mm was cut out at intervals of 30 mm in a certain width direction to obtain ten sheet raw materials and each weight was measured with a weight measuring apparatus with the minimum scale of 0.00001g, each weight ranged from 0.02031 to 0.02298 g. The average weight was 0.02144 g, and when this was divided by the specific gravity 1.14 of PA6 and was then divided by the area, the thickness was 20.9 $\mu$m and the variation in thickness in the width direction was 19.8 to 22.4 $\mu$m.

If the deviation of the thickness in the width direction of the resin sheet material Js from the average thickness is within ±10% with respect to the average thickness, in the heating and pressing apparatus, substantially uniform pressing can be performed in the width direction in the state where the fiber sheet material Ts and resin sheet material Js are molten. Thus, the molten resin can be substantially equally, in the width direction, impregnated into the fiber sheet material Ts, and the fiber reinforced resin sheet material Ps having a substantially uniform thickness in the width direction can be produced.

FIG. 4 is a schematic side view related to another exemplary apparatus implementing a production method for a fiber reinforced resin sheet material according to the present invention. FIG. 4 illustrates an exemplary apparatus attached with a mechanism for producing a resin film by extrusion molding, slitting the both side end portions of the resin film, and producing a resin sheet material having a predetermined width, in the exemplary apparatus of FIG. 1.

From a T die 12 attached to a non-illustrated extrusion molding apparatus, a wide and thin resin film Jf is continuously pushed out, and is conveyed in contact with a film cooling roll 13. At this time, the resin film Jf pushed out from the T die 12 is extended until being cooled by the film cooling roll 13, and shrinks in the width direction and in the thickness direction. When the resin film shrinks in the width direction, the film thickness of the both end portions becomes thick as compared with the film thickness of the center portion. Accordingly, in attempting to produce a film with a thickness to be set, both ends of the resin film need to be slitted.

In FIG. 4, both end portions of the resin film Jf conveyed from the film cooling roll 13 are continuously slitted with a slitting lower-receiving roll 14 and slitting rotary blade 15, and the center portion is continuously fed as the resin sheet material Js. The slitted end portion films 16 of both end portions are wound around a bobbin or the like for collection.

Since the sheet material of a center portion after being slitted is fed as the resin sheet material Js, both end portions of the resin film Jf are preferably slitted at a position where the thickness of the sheet material of a center portion after being slitted becomes within ±10% of the thickness set as the resin sheet material Js. Thus, substantially uniform pressing can be performed in the width direction on the fiber sheet material Ts and resin sheet material Js in a molten state, and the fiber reinforced resin sheet material Ps having a substantially uniform thickness in the width direction can be produced.

The examples of the method for continuously cutting a sheet raw material, such as a resin film, in the longitudinal direction include a "gang cut method," a "shear cut method," a "score cut method," and the like. In the "gang cut method," an upper blade and lower blade which are rotary round blades are assembled with the tips thereof superimposed so as to be able to produce a tiny gap therebetween, a sheet raw material is sandwiched between the overlapping portions, and the sheet raw material is cut by a shearing force of a portion where the upper blade and the lower blade are overlapped. In the "shear cut method," the upper blade and lower blade of a rotary round blade having an acute-angle blade edge having a relief angle are assembled so that the tip of the upper blade is pressed against the side surface of the lower blade, and the sheet raw material is cut as if with scissors. In the "score cut method, " a sheet raw material is cut while pressing the upper blade of a rotary round blade against a lower receiving roll with a hardness increased by heat treatment or the like. Although FIG. 4 illustrates the "score cut method," the other cutting method may be employed.

As illustrated in FIG. 4, a method including the steps of: producing a resin film by extrusion molding; slitting the both side end portions of the resin film and producing a resin sheet material with a predetermined width; and after the above-described steps continuously introducing the resin sheet material into a production apparatus for a fiber reinforced resin sheet material is capable of realizing a more continuous production of a fiber reinforced resin sheet material and also realizing a low cost production, as compared with a method for introducing a resin film wound around a core material, such as a bobbin.

In the production of a resin film, particularly a thin resin film, it is difficult to wind a thin resin film around a core material without being wrinkled for example, and to beautifully wind the same with a fixed tension, and thus an expensive winding equipment is required. Moreover, most resin films, each of which is wound around a core material etc., commercially available have the length of approximately 1,000 m to 2,000 m.

Accordingly, the method for directly introducing a resin film obtained by extrusion molding into a production apparatus for a fiber reinforced resin sheet material as a resin sheet material achieves a reduction in cost of production because it does not require an expensive winding equipment. Moreover, since a resin film can be continuously produced by extrusion molding, the restriction of a film length is eliminated, so that the maximum winding length of a fiber reinforced resin sheet material becomes up to the length wound around the bobbin of a reinforcing fiber bundle. For example, in the carbon fiber bundle 12K, the carbon fiber bundle with the length of approximately 5, 000 m to 7,000 m is wound around one bobbin, so a fiber reinforced resin sheet material with the length of 5, 000 m to 7,000 m can be also produced. Furthermore, since a resin film is produced and then introduced as a resin sheet material, a film having a stable quality can also be continuously produced by feeding back to the extrusion molding conditions while measuring the thickness of the resin film unlike the method for directly introducing the molten resin discharged from a T die.

When using an exemplary apparatuses as illustrated in FIG. 1, FIG. 2 and FIG. 4, the fiber sheet material Ts and resin sheet material Js are introduced, the fiber sheet material Ts and resin sheet material Js are superimposed so that the both side end portions of the fiber sheet material Ts are arranged outside the both side end portions of the resin sheet material Js, and heated and pressed so as to impregnate or semi-impregnate the resin sheet material Js into the fiber sheet material Ts, the fiber reinforced resin sheet material Ps can be produced by setting the heating temperature of the heating roll (heating roll 1A in FIG. 2) on the fiber sheet material Ts side to be equal to or higher than the melting temperature of the resin sheet material, and by setting the heating temperature of the heating roll (heating roll 1B in FIG. 2) on the resin sheet material Js side to be lower than the melting temperature of the resin sheet material.

By setting the heating temperature of the heating roll which the fiber sheet material Ts contacts via the conveying belt to be equal to or higher than the melting temperature of the resin sheet material Js, each fiber constituting the fiber sheet material is heated to the temperature equal to or higher than the melting temperature of the resin sheet material. If each fiber in such a state is pressed against a resin sheet material with a certain pressing force, the surface of the resin sheet material Js on the side in contact with the fiber sheet material Ts will be in a molten state, so that the molten resin can be caused to flow in between the respective fibers. At the same time, by setting the heating temperature of the heating roll which the resin sheet material Js contacts via the conveying belt to the temperature lower than the melting temperature of the resin sheet material Js, the surface on the heating roll side of the resin sheet material Js will be in an unmolten state, adhesion of the resin sheet material to the conveying belt can be prevented, and the peeling-off from the conveying belt of the fiber reinforced resin sheet material Ps after cooling can be easily performed.

When the fiber sheet material Ts and resin sheet material Js are introduced and are superimposed so that the both side end portions of the fiber sheet material Ts are arranged outside the both side end portions of the resin sheet material Js, and the both sheet materials are heated and pressed, and if the heating temperature of the heating roll (heating roll 1A in FIG. 2) on the fiber sheet material Ts side is set to be equal to or higher than the melting temperature of the resin sheet material, and the heating temperature of the heating roll (heating roll 1B in FIG. 2) on the resin sheet material Js side is set to the temperature lower than the melting temperature of the resin sheet material, the both sheet materials can be directly heated and pressed by the heating roll without using the conveying belt nor the conveying sheet.

That is, when the fiber sheet material Ts is impregnated or semi-impregnated into the resin sheet material Js, there are many fibers in the surface of the fiber sheet material Ts in directly contact with the heating roll, so the molten resin is conveyed while being adhering to the fiber without producing the adhering residue of the molten resin onto the surface of the heating roll, and the production can move to the solidifying step. Moreover, since in the surface of the resin sheet material Js in directly contact with the heating roll, the heating temperature of the heating roll is lower than the melting temperature of the resin, the resin will not adhere to the heating roll.

Then, also when directly heating and pressing with such a heating roll, in a series of steps from the superimposing step to the solidifying step a tension is applied to the fiber sheet material, composite sheet material, and fiber reinforced resin sheet material across the entire width including the side end portion of the fiber sheet material, the side end portion not overlapping with the resin sheet material.

That is, by applying a tension across the entire width including the side end portion of the fiber sheet material, the side end portion not overlapping with the resin sheet material, in the sheet materials conveyed in a series of steps, a tension is applied to each fiber of the fiber sheet material Ts so a trouble of winding of the fiber around the heating roll and cooling roll can be prevented. In particular, if the conveyance is performed in a relaxed state without a tension being applied to the fiber sheet portion arranged outside the both side end portions of the fiber reinforced resin sheet material Ps, a trouble often occurs, in which many fibers wind around the roll etc.

In the case of the exemplary apparatuses as illustrated in FIG. 1, FIG. 3, and FIG. 4, the first set of heating rolls 1 are driven by the drive motor 4, while the subsequent second set of heating rolls 1 and first and second sets of cooling rolls 2 freely rotate. Then, the pull-in roll 3 connected to the drive motor 5 pulls in the fiber reinforced resin sheet material while nipping the entire width including the fiber sheet portion arranged outside the both side end portions thereof. At this time, by introducing the fiber sheet material Ts into the heating roll 1 while a tension is being applied across the entire width of the fiber sheet material by a non-illustrated mechanism, for example, the fiber sheet material Ts and resin sheet material Js can be sandwiched and superimposed by the heating roll 1 and a tension can be applied across the entire width of the fiber sheet material Ts. Then, by setting the traveling speed of the first set of heating rolls to be similar to the traveling speed of the pull-in roll or setting the traveling speed of the pull-in roll to be slightly higher than the traveling speed of the first set of heating rolls, the overlapped fiber sheet material Ts and resin sheet material Js can be caused to travel while a tension is being applied across the entire width thereof. Moreover, as another method, by connecting a drive motor to all the rolls and controlling the rotation speed of each of the motors so as to be similar or slightly higher as going toward the downstream side, the sheet material can also be caused to travel so that a tension is applied across the entire width of the sheet material at each step.

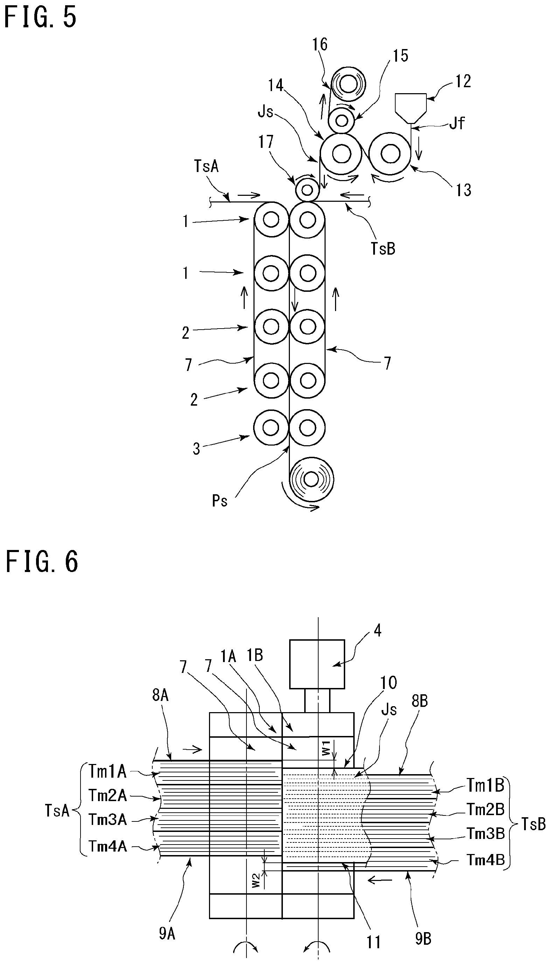

FIG. 5 is a schematic side view related to another exemplary apparatus implementing a production method for a fiber reinforced resin sheet material according to the present invention. FIG. 5 illustrates an exemplary apparatus with the apparatus configuration of FIG. 4 for introducing a pair of fiber sheet materials TsA, TsB from the both sides of the pair of heating rolls 1, arranging the resin sheet material Js onto the surface of the fiber sheet material TsB so as to superimpose the resin sheet material Js on this surface, superimposing and arranging a pair of fiber sheet materials TsA, TsB on the both sides of the resin sheet material Js, and producing the fiber reinforced resin sheet material Ps.

Here, the both ends of the resin film Jf pushed out from the T die 12 are continuously slitted with the slitting lower-receiving roll 14 and slitting rotary blade 15, and a sheet material of a center portion having a substantially fixed thickness is superimposed, as the resin sheet material Js, on the surface of the fiber sheet material TsB along a turnaround roll 17, and introduced into the heating roll.

In this example, the following steps are performed: a superimposing step of superimposing one side of the resin sheet material Js on the fiber sheet material TsB to be introduced into the heating roll 1 on the upper stream side using the turnaround roll 17; and then a superimposing step of superimposing the fiber sheet material TsA on another side of the resin sheet material Js between the heating rolls 1. Then, between the heating rolls 1, the following step is performed: an integrating step of heating and pressing the superimposed fiber sheet material TsA, resin sheet material Js, and fiber sheet material TsB and thereby impregnating or semi-impregnating the molten resin sheet material Js into the fiber sheet material TsA and fiber sheet material TsB and obtaining a composite sheet material. Then, also between the heating rolls 1 on the downstream side, a similar integrating step is performed.

In this example, the superimposing step is performed in the following two steps. In the first step, the fiber sheet material TsB is superimposed on one side of the resin sheet material Js, then in the next step, the fiber sheet material TsA is superimposed on another side of the resin sheet material Js. In the first step, the fiber sheet material TsB is superimposed on one side of the resin sheet material Js having passed through the turnaround roll 17, on the heating roll 1. Then, while being in contact with the surface of the heating roll 1 via the conveying belt 7, the fiber sheet material TsB and resin sheet material Js are heated, so when the temperature reaches the melting temperature of the resin sheet material Js by heating, a slightly molten resin will impregnate into the fiber sheet material TsB. In the next step, the superimposed resin sheet material Js and fiber sheet material TsB are introduced in between the heating rolls 1 together with the fiber sheet material TsA, and the fiber sheet material TsA is superimposed on another side of the resin sheet material Js. Then, an integrating step will be performed, in which a composite sheet material is obtained by heating and pressing the superimposed three sheet materials with the heating rolls 1 and thereby impregnating or semi-impregnating the molten resin sheet material Js into the fiber sheet material TsA and fiber sheet material TsB.

FIG. 6 is an explanatory view related to the arrangement of the fiber sheet materials TsA, TsB and resin sheet material Js. Here, the fiber sheet materials TsA, TsB are introduced from the both sides of the pair of heating rolls 1, respectively, and the resin sheet material Js is arranged and introduced in the surface of the fiber sheet material TsB. In FIG. 6, both the fiber sheet materials TsA, TsB are unidirectionally reinforced sheet materials obtained by aligning and arranging four fiber bundles Tm in the width direction. The fiber sheet material TsA includes fiber bundles Tm1A, Tm2A, Tm3A, and Tm4A, while the fiber sheet material TsB includes fiber bundles Tm1B, Tm2B, Tm3B, and Tm4B. Note that, the number of fiber bundles Tm arranged in the width direction may be one or may be plural or may be any number, as needed.

The fiber sheet materials TsA, TsB may be, when each width is the same, arranged so as to overlap with each other, or may be shifted and arranged in the width direction as illustrated in FIG. 6. In FIG. 6, the boundary position (a line in the longitudinal direction where the end portions of the fiber bundles Tm contact to each other) between the fiber bundles Tm arranged in the width direction and constituting the fiber sheet material TsA will not overlap with the boundary position between the fiber bundles Tm arranged in the width direction and constituting the fiber sheet material TsB. By shifting and arranging the fiber sheet materials TsA, TsB in this manner so that the boundary positions thereof do not overlap with each other, a gap between the fiber bundles produced at the boundary position by a fluctuation of the width of the fiber bundle Tm of one of the fiber sheet materials overlaps with, in the width direction, a portion near the center in the width direction of the fiber bundle Tm of the other one of the fiber sheet materials . As the result, a gap portion without the fiber as the fiber reinforced resin sheet material Ps is unlikely to be produced, resulting in a high-quality sheet material.

The gap between the fiber bundles is likely to be produced probably because a tensile force on the fiber bundle increases as the processing speed at which the fiber reinforced resin sheet material Ps is produced is increased. Once the gap between the fiber bundles is produced, then depending on the size of this gap, continuous adhesion of the molten resin to the fiber may be interrupted and the molten resin protrudes from the gap and adheres to the conveying belt or conveying sheet. Accordingly, as illustrated in FIG. 6, the method for shifting and arranging the fiber sheet materials TsA, TsB in the width direction so that the boundary positions between the fiber bundles Tm will not overlap with each other results in a method capable of producing the high-quality fiber reinforced resin sheet material Ps at high speed.

When the fiber sheet materials TsA, TsB are arranged on both sides of the resin sheet material Js, it is possible to arrange one side end portion 8A of the fiber sheet material TsA and one side end portion 8B of the fiber sheet material TsB outside one side end portion 10 of the resin sheet material Js, and arrange another side end portion 9A of the fiber sheet material TsA and another side end portion 9B of the fiber sheet material TsB outside another side end portion 11 of the resin sheet material Js, and superimpose the resultant fiber sheet materials TsA, TsB and the resin sheet material Js. Moreover, as illustrated in FIG. 6, it may be possible to arrange the fiber sheet materials TsA, TsB so as to shift from each other in the width direction, arrange one side end portion 8A of the fiber sheet material TsA so as to be away by a length W1 outside one side end portion 10 of the resin sheet material Js, arrange another side end portion 9B of the fiber sheet material TsB so as to be away by a length W2 outside another side end portion 11 of the resin sheet material Js, and superimpose the fiber sheet materials TsA, TsB and the resin sheet material Js.

Note that, in the example illustrated in FIG. 6, in the first step in the superimposing step, the fiber sheet material TsB and resin sheet material Js are superimposed so that one side end portion 9B of the fiber sheet material TsB is arranged so as to shift by the length W2 outside one side end portion 11 of the resin sheet material Js. Then, the superimposed sheet materials are heated on the surface of the heating roll 1, and when the temperature reaches the melting temperature of the resin sheet material Js, with the force for pressing the resin sheet material Js against the roll surface the resin sheet material Js will adhere to or be slightly impregnated into the fiber sheet material TsB. At this stage, the side end portion of the fiber sheet material is present outside one side end portion of the resin sheet material. In the next step in the superimposing step, the fiber sheet material TsA and resin sheet material Js are superimposed so that one side end portion 8A of the fiber sheet material TsA is arranged so as to shift by the length W1 outside another side end portion 10 of the resin sheet material Js, between the heating rolls 1. Then, the integrating step is performed, in which the resin sheet material Js is semi-impregnated or impregnated into the fiber sheet material TsA and fiber sheet material TsB by being heated and pressed between the heating rolls 1. At this stage, the side end portion of the fiber sheet material is arranged outside the both side end portions of the resin sheet material.

By arranging in this manner, when the entire surface of the resin sheet material Js melts and is impregnated or semi-impregnated into the fiber sheet materials TsA, TsB, continuous adhesion of only the molten resin to the conveying belt or conveying sheet can be prevented.

When the fiber sheet materials TsA, TsB are arranged on both sides of the resin sheet material Js and the side end portions of fiber sheet materials TsA, TsB are arranged outside the both side end portions of the resin sheet material Js for superimposition, the both sides of a composite sheet material obtained by superimposing and integrating the fiber sheet materials TsA, TsB and resin sheet material Js result in a fiber sheet material, so that the molten resin is unlikely to be exposed. Therefore, after directly heating and pressing without using the conveying belt nor conveying sheet, the fiber reinforced resin sheet material Ps can be continuously produced through the solidifying step by cooling. For example, using the apparatus as illustrated in FIG. 5, the composite sheet material can be directly sandwiched and conveyed with the heating rollers 1 and cooling rollers 2 without using the conveying belt 7.

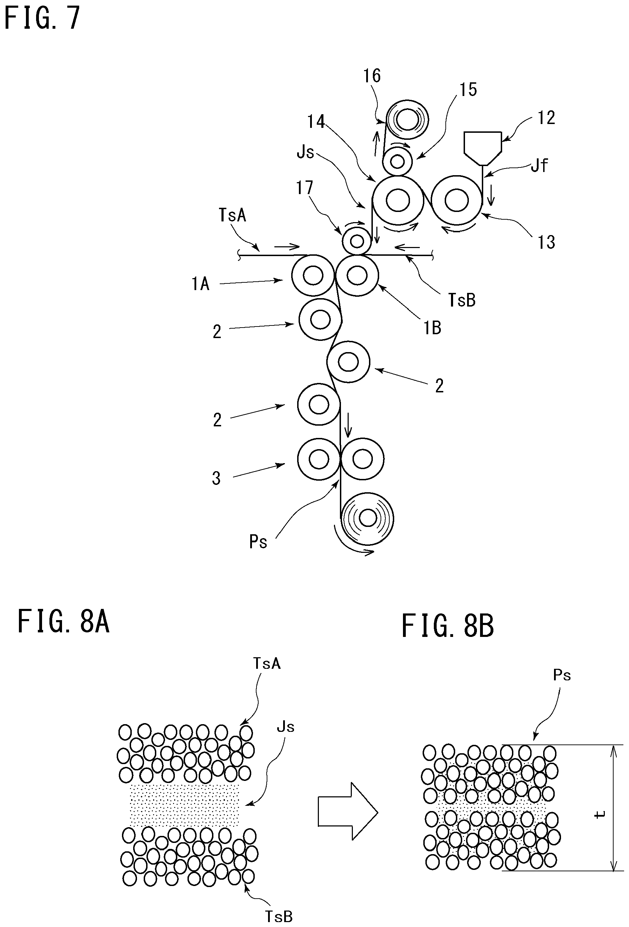

FIG. 7 is an apparatus configuration diagram related to a modified example of the apparatus illustrated in FIG. 5. In the apparatus configuration of FIG. 5, the configuration of the heating roll and cooling roll is changed and one set of pair of heating rolls is arranged, and then three cooling rolls 2 are arranged in zigzags. Note that, the number of heating rolls and the number of cooling rolls may be adequately selected depending on various conditions, such as an employed fiber, resin, heating temperature, pressing force, and processing speed. Then, the fiber sheet material TsA is introduced from the heating roll 1A side, and the fiber sheet material TsB is introduced from the heating roll 1B side, and the resin sheet material Js obtained by extrusion molding is arranged on and introduced into the upper side of the fiber sheet material TsB, so that the fiber sheet materials TsA, TsB are superimposed across both sides of the resin sheet material Js. In FIG. 7, the composite sheet material is directly conveyed with the heating roll and cooling roll without using the release belt and release sheet as illustrated in FIG. 5.

In the state where the fiber sheet materials TsA, TsB are superimposed across both sides of the resin sheet material Js, if the resin sheet material Js is molten by heating and pressing and impregnated or semi-impregnated into the fiber sheet materials TsA, TsB, the entire surface of the resin sheet material Js results in a molten resin, and adheres to the fiber, so that many fibers are continuously present on both sides of the formed composite sheet material. Then, since the formed composite sheet material is in such a state, even when directly heating and pressing with the heating roll, the molten resin is held by the reinforcing fiber and conveyed without producing the adhesion residue of the molten resin onto the roll surface, and the production can smoothly move to the next solidifying step.

Also when directly heating and pressing with such a heating roll, in a series of steps from the superposing step to the solidifying step, it is important that a tension is applied to the fiber sheet material, composite sheet material, and fiber reinforced resin sheet material across the entire width including the side end portion of the fiber sheet material, the side end portion not overlapping with the resin sheet material.

That is, by applying a tension across the entire width including the side end portion of the fiber sheet material, the side end portion not overlapping with the resin sheet material of the sheet material conveyed in a series of steps, a tension is applied to each fiber of the fiber sheet materials TsA, TsB, so that a trouble of winding of the fiber around the heating roll and cooling roll can be prevented. In particular, if the resin sheet material Js is conveyed in a relaxed state without a tension being applied to the fiber sheet portion arranged outside the both side end portions of the fiber reinforced resin sheet material Ps, a trouble often occurs, in which many fibers wind around the roll etc.

In the case of the exemplary apparatus as illustrated in FIG. 7, the heating rolls 1 are driven by the drive motor and the subsequent cooling rolls 2 freely rotate. Then, the pull-in roll 3 connected to the drive motor pulls in the fiber reinforced resin sheet material while nipping the entire width including the fiber sheet portion arranged outside the both side end portions thereof. At this time, by introducing the fiber sheet materials TsA, TsB into the heating rolls 1A, 1B, respectively, while a tension is being applied across the entire width of the fiber sheet materials by a non-illustrated mechanism, for example, a tension can be applied across the entire width of the fiber sheet materials TsA, TsB in the first step of superimposing the fiber sheet material TsB and resin sheet material Js and in the next step of further superposing the fiber sheet material TsA, in the superposing step. Then, by setting the traveling speed of the first set of heating rolls to be similar to the traveling speed of the pull-in roll or setting the traveling speed of the pull-in roll to be slightly higher than the traveling speed of the first set of heating rolls, the overlapped fiber sheet material and resin sheet material can be caused to travel while a tension is being applied across the entire width thereof. Moreover, as another method, by connecting a drive motor to all the rolls and controlling the rotation speed of each of the motors so as to be a similar or to be a slightly higher as going toward the downstream side, the sheet material can also be caused to travel so that a tension is applied across the entire width of the sheet material at each step.

By arranging the fiber sheet materials TsA, TsB and the side end portions thereof outside both sides of the resin sheet material Js for superimposition, and by causing the fiber sheet material, composite sheet material and fiber reinforced resin sheet material to travel in the state where a tension is being applied across the entire width including the fiber sheet portion where the resin sheet material is not superimposed, in a series of steps from the superposing step of superposing the fiber sheet materials TsA, TsB and resin sheet material Js through the integrating step and solidifying step, the molten resin is conveyed while adhering to and being held by the fiber constituting the fiber sheet material, so that the continuous adhering of the molten resin to the apparatus for heating and pressing and to the apparatus for cooling can be prevented. Therefore, the production of the continuous fiber reinforced resin sheet material Ps can be realized without using the conveying belt nor the conveying sheet.

Then, when a spread yarn sheet is used as the fiber sheet material, a method for continuously introducing the spread yarn sheet as the fiber sheet material is employed, the spread yarn sheet being produced by a spreading apparatus including at least the fluidly-spreading mechanism 19, longitudinal vibration applying mechanism 20, and lateral vibration applying mechanism 21, so that a spread yarn sheet excellent in fiber dispersibility across the entire width thereof and having a non-continuous gap between fibers can be introduced. Accordingly, the continuous adhering of the molten resin to the apparatus for heating and pressing and to the apparatus for cooling can be prevented, and the production of the continuous fiber reinforced resin sheet material Ps made from a spread yarn sheet can be realized without using the conveying belt nor the conveying sheet.

By heating and pressing so that the thickness of the fiber reinforced resin sheet material Ps to be produced becomes thicker than the thickness in the state where the resin sheet material Js melts and is completely impregnated into the fiber sheet materials TsA, TsB, the adhering of the molten resin to the apparatus for heating and pressing and to the apparatus for cooling can be further prevented. The examples of means for adjusting the thickness of the fiber reinforced resin sheet material Ps include means for adjusting the heating temperature, pressing force, and processing speed (feed speed), and means for setting a predetermined gap and heating and pressing while causing a sheet material to pass therethrough.

Here, the thickness in the state where the resin sheet material Js melts and is completely impregnated into the fiber sheet materials TsA, TsB is the thickness in the state where the resin sheet material Js is completely impregnated throughout the fiber sheet materials TsA, TsB and there is almost no void thereinside. Here, the state where there is almost no void is the state where there is nothing which can be apparently recognized as a void as the results of observing the cross-section of an obtained sheet material.

When the thickness in the state where the resin sheet material Js melts and is impregnated into the fiber sheet materials TsA, TsB is denoted by a thickness tp, the thickness tp can be obtained by the following two types of methods.

(1) The thickness of a sheet material obtained in the state where the resin sheet material Js is completely impregnated throughout the fiber sheet materials TsA, TsB is actually measured, and the average value thereof is calculated as the thickness tp. The actual measurement of the thickness can be made by measuring with for example an external micrometer with the minimum display quantity of 0.001 mm specified in JIS B 7502 (corresponding to International Standard ISO 3611).

(2) If the specific gravity of the reinforcing fiber material used for the fiber sheet material TsA is designated by $\rho_1$ (g/cm$^3$), the areal weight of the sheet material by $M_1$ (g/m$^2$), the specific gravity of the reinforcing fiber material used for the fiber sheet material TsB by $\rho_2$ (g/cm$^3$), the areal weight of the sheet material by $M_2$ (g/m$^2$), the specific gravity of the resin material used for the resin sheet material by $\rho_3$ (g/cm$^3$), and the areal weight of the sheet material by $M_3$ (g/m$^2$), the thickness tp can be obtained from the formula below.

$$\text{Tp (mm)} = ((M_1/\rho_1) + (M_2/\rho_2) + (M_3/\rho_3))/1000$$

FIG. 8A and 8B illustrates an explanatory view indicative of a state where the fiber sheet materials TsA, TsB are arranged and superimposed on both sides of the resin sheet material Js (FIG. 8A) and an explanatory view related to the fiber reinforced resin sheet material Ps impregnated with the resin (FIG. 8B). As illustrated in FIG. 8B, when the thickness of the fiber reinforced resin sheet material Ps to be produced is designated by "t," and if the production is performed under the processing condition set so as to be t>tp, the molten resin will be semi-impregnated into the fiber sheet materials TsA, TsB and many fibers will be present on both sides of the obtained fiber reinforced resin sheet material. Therefore, a continuous fiber reinforced resin sheet material can be produced without the molten resin adhering to the heating and pressing apparatus at a portion in contact with the heating and pressing apparatus .

[Examples]

[Example 1]

<Employed materials>

Reinforcing fiber material: carbon fiber bundle (manufactured by Toray Industries, Inc., T700SC-60E-12,000/bundle, single-yarn diameter: 7 $\mu$m)
Thermoplastic resin material: PA6 resin film (manufactured by Mitsubishi Plastics Industries, Ltd., DIAMIRON, 140 mm width, 20 $\mu$m thickness)

<Production method>

The production was performed in the apparatus configuration illustrated in FIG. 3 with the spreading apparatus illustrated in FIG. 9 and FIG. 10 attached thereto. Although the exemplary apparatus illustrated in FIG. 3 includes dual pairs of heating rolls 1, the apparatus configuration in this Example included a single pair of heating rolls 1 and dual pairs of cooling rolls 2. As the conveying belt 7, a fluorine-containing resin belt (G type belt) manufactured by Chukoh Belt Corporation, Ltd. was used. The setting temperature of the heating roll 1 was set to 270 degrees, and the pressing force between the heating rolls was set to a linear pressure of 20 kgf/cm. Moreover, a mechanism was built, in which the heating roll 1B was rotationally driven by the drive motor 4 so as to obtain the processing speed of 10 m/min, while the heating roll 1A and cooling roll 2 freely rotated. The rotation of the pull-in roll 3 was controlled by the drive motor 5 so that a slight tension was loaded across the entire width of the sheet.
Eight carbon fiber bundles were arranged in the width direction at an interval of 20 mm, and each of them was spread across the width of 20 mm by the spreading apparatus to obtain a spread yarn sheet with the width of 160 mm and with the areal weight of approximately 40 g/m$^2$. The obtained spread yarn sheet was continuously introduced into the heating roll 1 as the fiber sheet material Ts. The PA6 resin film was introduced into the heating roll 1 as the resin sheet materials JsA, JsB. At this time, the obtained spread yarn sheet was introduced so that the end portion 10A of the resin sheet material JsA and the end portion 10B of the resin sheet material JsB were continuously arranged at the position of 10 mm inside from the end portion 8 of the fiber sheet material Ts, and the end portion 11A of the resin sheet material JsA and the end portion 11B of the resin sheet material JsB were continuously arranged at the position of 10 mm inside from the end portion 9 of the fiber sheet material Ts. Note that, at the substantially center portion of a spread fiber bundle located at the both ends of eight spread fiber bundles constituting the fiber sheet material, the both ends (10A, 11A, and 10B, 11B) of the resin sheet materials JsA, JsB will be arranged. The introduced fiber sheet material Ts and resin sheet materials JsA, JsB were heated and pressed, and then cooled and peeled off from the conveying belt to obtain the fiber reinforced resin sheet material Ps while winding the same around a 3-inch paper tube.

<Situation during manufacture and state of fiber reinforced resin sheet material>

When this production was performed for one hour, a fiber reinforced resin sheet material was stably produced. The molten resin of the resin sheet material did not adhere to the conveying belt. Moreover, the fiber reinforced resin sheet material of approximately 600 m was obtained by one hour production, but when the fiber reinforced resin sheet material Ps wound around the 3-inch paper tube was unwound, troubles, such as the entanglement of a fiber portion, where the resin was not impregnated, at both end portions, did not occur and the unwinding could be stably performed through to completion. Note that, the obtained fiber reinforced resin sheet material Ps was the sheet material in a semi-impregnation state, and when the thickness of this portion was measured using an external micrometer (manufactured by Mitutoyo Corporation) with the minimum display scale of 0.001 mm, it was approximately 0.093 mm in average.

[Example 2]

<Employed materials>

The reinforcing fiber material and thermoplastic resin material similar to the Example 1 were used.

<Production method>

The production was performed in the apparatus configuration illustrated in FIG. 1 and FIG. 2 with the spreading apparatus illustrated in FIG. 9 and FIG. 10 attached thereto. Although the exemplary apparatus illustrated in FIG. 1 includes dual pairs of heating rolls 1, the apparatus configuration in this Example included a single pair of heating rolls 1 and dual pairs of cooling rolls 2. Without using the conveying belt nor conveying sheet, the setting temperature of the heating roll 1A directly contacting the fiber sheet material Ts was set to 270 degrees and the setting temperature of the heating roll 1B directly contacting the resin sheet material Js was set to 150 degrees. The pressing force between the heating rolls was set to the linear pressure of 20 kgf/cm. Moreover, a mechanism was built, in which the heating roll 1B was rotationally driven by the drive motor 4 so as to obtain the processing speed of 10 m/min, while the heating roll 1A and cooling roll 2 freely rotated. The rotation of the pull-in roll 3 was controlled by the drive motor 5 so that a slight tension was loaded across the entire width of the sheet.

Eight carbon fiber bundles were arranged in the width direction at an interval of 20 mm, and each of them was spread across the width of 20 mm by the spreading apparatus to obtain a spread yarn sheet with the width of 160 mm and with the areal weight of approximately 40 g/m$^2$. The obtained spread yarn sheet was continuously introduced along the heating roll 1A as the fiber sheet material Ts. Moreover, the PA6 resin film was introduced along the heating roll 1B as the resin sheet material Js. At this time, the fiber sheet material Ts and resin sheet material Js were introduced so that the end portion 10 of the resin sheet material Js was continuously arranged at the position of the length W1 of 10 mm inside from the end portion 8 of the fiber sheet material Ts, and the end portion 11 of the resin sheet material Js was continuously arranged at the position of the length W2 of 10 mm inside from the end portion 9 of the fiber sheet material Ts. Note that, at the substantially center portion of a spread fiber bundle located at the both ends of eight spread fiber bundles constituting the fiber sheet material, the both ends (end portion 10 and end portion 11) of the resin sheet material Js will be arranged. The introduced fiber sheet material Ts and resin sheet material Js were heated and pressed, and then were directly introduced, as is, into the cooling roll to obtain the fiber reinforced resin sheet material Ps while winding the same around a 3-inch paper tube.

<Situation during manufacture and state of fiber reinforced resin sheet material>

When this production was performed for one hour, a fiber reinforced resin sheet material was stably produced. Even without using the conveying belt nor the conveying sheet, the trouble of adhering of the molted resin to the surface of the heating roll nor the cooling roll did not occur. It is conceived that with the heating roll 1B set to approximately 150 degrees the PA6 resin did not adhere to the heating roll because the melting point of the used PA6 resin film is approximately 220 degrees. Moreover, it is conceived that although the heating roll 1A was set to approximately 270 degrees and the fiber sheet material was heated to the extent that it melts the PA6 resin film, at the contact portion between the fiber sheet material and heating roll 1A there was not enough amount of molten resin to adhere to the heating roll 1A. Accordingly, the molten resin did not adhere to the heating roll 1A, the molten resin adhered to and was impregnated into the fiber sheet material and the resultant fiber sheet material moved to the cooling roll. The fiber reinforced resin sheet material of approximately 600 m was obtained by one hour production, but when the fiber reinforced resin sheet material Ps wound around a 3-inch paper tube was unwound, troubles, such as the entanglement of a fiber portion, where the resin was not impregnated, at both end portions, did not occur and the unwinding could be stably performed through to completion. Note that, the obtained fiber reinforced resin sheet material Ps was the sheet material in a semi-impregnation state, and when the thickness of this portion was measured using an external micrometer (manufactured by Mitutoyo Corporation) with the minimum display scale of 0.001 mm, it was approximately 0.084 mm in average.

[Example 3]

<Employed materials>

Reinforcing fiber material: carbon fiber bundle (manufactured by Toray Industries, Inc., T700SC-60E-12,000/bundle, single-yarn diameter: 7 $\mu$m)
Thermoplastic resin material: PA6 resin pellet (Mitsubishi Engineering-Plastics Corporation; NOVAMID ST120)

<Production method>

The production was performed in the apparatus configuration illustrated in FIG. 5 and FIG. 6 with the spreading apparatus illustrated in FIG. 15A and FIG. 15B in Japanese patent No. 5553074 attached to the both sides of the heating roll 1, respectively. Although the exemplary apparatus illustrated in FIG. 5 includes dual pairs of heating rolls 1, the apparatus configuration in this Example includes a single pair of heating rolls 1 and dual pairs of cooling rolls 2. As the conveying belt 7, a fluorine-containing resin belt (G type belt) manufactured by Chukoh Belt Corporation, Ltd. was used. The setting temperature of the heating roll 1 was set to 270 degrees, and the pressing force between the heating rolls was set to the linear pressure of 25 kgf/cm. Moreover, a mechanism was built, in which the heating roll 1B was rotationally driven by the drive motor 4 so as to obtain the processing speed of 20 m/min, while the heating roll 1A and cooling roll 2 freely rotated. Using the $\varphi$ 25 mm one-axis extrusion molding apparatus manufactured by IMOTO MACHINERY CO.,

LTD. as the extrusion molding apparatus, the T die 12 with the slit width of 250 mm was attached to a head section of the extrusion molding apparatus. The both ends of the resin film Jf pushed out from the T die 12 were continuously cut using a score cut method, and the cut film at both ends was traverse-wound and collected onto the three-inch paper tube. The rotation of the pull-in roll 3 is controlled by the drive motor 5 so that a slight tension was loaded across the entire width of the sheet.

In each spreading apparatus, four carbon fiber bundles were respectively spread across the width of 38 mm to obtain a spread yarn sheet with the width of 152 mm and with the areal weight of approximately 21 $g/m^2$, and were continuously introduced into the heating roll as the fiber sheet materials TsA, TsB, respectively. As illustrated in FIG. 6, the fiber sheet materials TsA, TsB were shifted from each other in the width direction so that the end portions of the respective spread fiber bundles would not overlap with each other in the thickness direction. The end portion 8B of the fiber sheet material TsB was arranged at the position shifted in the width direction by 18 mm from the end portion 8A of the fiber sheet material TsA. Then, the fiber sheet material TsA was continuously introduced along the heating roll 1A while the fiber sheet material TsB was continuously introduced along the heating roll 1B.

The PA6 resin pellet was dried for approximately one day in vacuum at 80 degrees in a vacuum heating and drying apparatus, and was then fed to the extrusion molding apparatus, where a resin film was continuously pushed out from the T die 12. In the extrusion molding apparatus, a portion in a vicinity of a pellet feeder was set to 150 degrees, a tip portion was set to 270 degrees, and the T die 12 was set to 270 degrees. The resin sheet material Js with the average thickness of 20 $\mu$m and with the width of 150 mm was produced by slitting the both ends of the resin film pushed out from the T die 12, and at the same time was continuously introduced along the upper side of the fiber sheet material TsB of the heating roll 1B. In this Example, the fiber sheet materials TsA, TsB are arranged on both sides of the resin sheet material Js.

The fiber sheet materials TsA, TsB and resin sheet material Js were introduced so that the end portion 10 of the resin sheet material Js was continuously arranged at the position of the length W1 of 10 mm inside from the end portion 8A of the fiber sheet material TsA, and the end portion 11 of the resin sheet material Js was continuously arranged at the position of the length W2 of 10 mm inside from the end portion 9B of the fiber sheet material TsB (see FIG. 6). After the introduced fiber sheet materials TsA, TsB and resin sheet material Js were heated and pressed, they were introduced, as is, into the cooling roll and peeled off from the conveying belt to obtain the fiber reinforced resin sheet material Ps while winding the same around a 3-inch paper tube. Continuous production was performed in this manner.

<Situation during manufacture and state of fiber reinforced resin sheet material>

When this production was performed for one hour, a fiber reinforced resin sheet material was stably produced. The molten resin of the resin sheet material did not adhere to the conveying belt. Moreover, the fiber reinforced resin sheet material of approximately 1200 m was obtained by one hour production, but when the fiber reinforced resin sheet material Ps wound around a 3-inch paper tube was unwound, troubles, such as the entanglement of a fiber portion, where the resin was not impregnated, at both end portions, did not occur and the unwinding could be stably performed through to completion. Note that, the obtained fiber reinforced resin sheet material Ps was the sheet material in a semi-impregnation state, and when the thickness of this portion was measured using an external micrometer (manufactured by Mitutoyo Corporation) with the minimum display scale of 0.001 mm, it was approximately 0.062 mm in average. As compared with Examples 1, 2, etc., a fiber reinforced resin sheet material was obtained, in which the impregnation of the resin was further progressed.

[Example 4]

<Employed materials>

Reinforcing fiber material: Carbon fiber bundle (manufactured by Toray Industries, Inc., T700SC-60E-12,000/bundle, single-yarn diameter: 7 $\mu$m)
Thermoplastic resin material: PP resin film (Mitsui Chemicals Tohcello. Inc., Admer, width 150 mm, thickness 30 $\mu$m).

<Production method>

The production was performed in the apparatus configuration in Example 3 without the extrusion molding apparatus and the mechanism for molding a resin film, such as a T die, and producing a resin sheet material and with a mechanism capable of directly introducing, as the resin sheet material, a PP resin film wound around a bobbin attached thereto. Note that, in the spreading apparatus, as with Example 3, a total of two sets of spreading apparatuses, the spreading apparatus being illustrated in FIG. 15A and FIG. 15B in Japanese patent No. 5553074, were attached to the both sides of the heating roll 1, respectively. As the conveying belt 7, a fluorine-containing resin belt (G type belt) manufactured by Chukoh Belt Corporation, Ltd. was used. The setting temperature of the heating roll 1 was set to 240 degrees, the pressing force between the heating rolls was set to the linear pressure of 30 kgf/cm, and the processing speed was set to 10 m/min. The rotation of the pull-in roll 3 was controlled by the drive motor 5 so that a slight tension was loaded across the entire width of the sheet.

As with Example 3, in each spreading apparatus, four carbon fiber bundles were respectively spread across the width of 38 mm to obtain a spread yarn sheet with the width of 152 mm and with the areal weight of approximately 21 g/m$^2$, and were continuously introduced into the heating roll as the fiber sheet materials TsA, TsB, respectively. The fiber sheet materials TsA, TsB were shifted from each other in the width direction so that the end portions of the respective spread fiber bundles would not overlap with each other in the thickness direction. Then, the fiber sheet material TsA was continuously introduced along the heating roll 1A while the fiber sheet material TsB was continuously introduced along the heating roll 1B. The resin sheet material Js was continuously introduced along the upper side of the fiber sheet material TsB of the heating roll 1B. Also in this Example, as with Example 3, the fiber sheet materials TsA, TsB are arranged on the both surfaces of the resin sheet material Js.

The fiber sheet materials TsA, TsB and resin sheet material Js were introduced so that the end portion 10 of the resin sheet material Js was continuously arranged at the position of the length W1 of 10 mm inside from the end portion 8A of the fiber sheet material TsA, and the end portion 11 of the resin sheet material Js was continuously arranged at the position of the length W2 of 10 mm inside from the end portion 9B of the fiber sheet material TsB (see FIG. 6). After the introduced fiber sheet materials TsA, TsB and resin sheet material Js were heated and pressed, they were introduced, as is, into the cooling roll, and peeled off from the conveying belt to obtain the fiber reinforced resin sheet material Ps while winding the same around a 3-inch paper tube. Continuous production was performed in this manner.

<Situation during manufacture and state of fiber reinforced resin sheet material>

When this production was performed for one hour, a fiber reinforced resin sheet material was stably produced. The molten resin of the resin sheet material did not adhere to the conveying belt. Moreover, the fiber reinforced resin sheet material of approximately 600 m was obtained by one hour production, but when the fiber reinforced resin sheet material Ps wound around a 3-inch paper tube was unwound, troubles, such as the entanglement of a fiber portion, where the resin was not impregnated, at both end portions, did not occur and the unwinding could be stably performed through to completion. Note that, when the thickness of the resin-impregnated portion in the obtained fiber reinforced resin sheet material Ps was measured using an external micrometer (manufactured by Mitutoyo Corporation) with the minimum display scale of 0.001 mm, it was approximately 0.058 mm in average. When the thickness tp was measured in the state where the resin sheet material Js melts and may be completely impregnated into the fiber sheet materials TsA, TsB, it was approximately 0.053 mm. Therefore, the fiber reinforced resin sheet material Ps obtained in this Example may be a sheet material substantially entirely impregnated with the resin.

[Example 5]

<Employed materials>

Both the reinforcing fiber material and thermoplastic resin material similar to the Example 3 were used.

<Production method>

The production was performed in the apparatus configuration illustrated in FIG. 7 with the spreading apparatus illustrated in FIG. 15A and FIG. 15B in Japanese patent No. 5553074 attached to the both sides of the heating roll 1, respectively. The setting temperature of the heating rolls 1A, 1B was set to 270 degrees, and the pressing force between the heating rolls was set to the linear pressure of 25 kgf/cm. Moreover, a mechanism was built, in which the heating roll 1B was rotationally driven by the drive motor so as to obtain the processing speed of 20 m/min, while the heating roll 1A and three cooling rolls 2 freely rotated. Note that the pressing force between the heating rolls was generated by pressing the heating roll 1A against the heating roll 1B with a non-illustrated air cylinder etc. As with Example 3, using an extrusion molding apparatus and the T die 12, the resin sheet material Js was produced by slitting both ends thereof while preparing the resin film, and this resin sheet material Js was continuously introduced so as to be superimposed on the upper side of the fiber sheet material TsB of the heating roll 1B. The pull-in roll 3 was set, by the drive motor, so as to obtain the processing speed slightly higher than the heating roll, and until the fiber reinforced resin sheet material was obtained through the cooling step from the step of superimposing the fiber sheet material and the resin sheet material, the fiber sheet material and resin sheet material were caused to travel while a tension was being loaded across the entire width of the fiber sheet material and across the entire width of the fiber reinforced resin sheet material including the fiber sheet portion outside both-ends thereof.

In each spreading apparatus, four carbon fiber bundles were respectively spread across the width of 38 mm to obtain a spread yarn sheet with the width of 152 mm and with the areal weight of approximately 21 g/m$^2$, and were continuously introduced into the heating roll as the fiber sheet materials TsA, TsB, respectively. The fiber sheet materials TsA, TsB were shifted from each other in the width direction so that the end portions of the respective spread fiber bundles would not overlap with each other in the thickness direction. The end portion 8B of the fiber sheet material TsB was arranged at the position shifted in the width direction by 10 mm from the end portion 8A of the fiber sheet material TsA (see FIG. 6). Then, the fiber sheet material TsA was continuously introduced along the heating roll 1A while the fiber sheet material TsB was continuously introduced along the heating roll 1B.

The PA6 resin pellet was dried for approximately one day in vacuum at 80 degrees in a vacuum heating and drying apparatus, and was then fed to the extrusion molding apparatus, where a resin film was continuously pushed out from the T die 12. The resin sheet material Js with the average thickness of 20 $\mu$m and with the width of 130 mm was produced by slitting the both ends of the resin film pushed out from T die 12, and at the same time was continuously introduced along the upper side of the fiber sheet material TsB on the heating roll 1B. In this Example, the fiber sheet materials TsA, TsB are arranged on the both surfaces of the resin sheet material Js.

The fiber sheet materials TsA, TsB and resin sheet material Js were introduced so that the end portion 10 of the resin sheet material Js was continuously arranged inside from the end portion 8A of the fiber sheet material TsA and end portion 8B of the fiber sheet material TsB, and the end portion 11 of the resin sheet material Js was continuously arranged inside from the end portion 9A of the fiber sheet material TsA and the end portion 9B of the fiber sheet material TsB. The introduced fiber sheet materials TsA, TsB and resin sheet material Js were heated and pressed without using the conveying belt nor the conveying sheet, and were then introduced, as is, into the cooling roll to obtain the fiber reinforced resin sheet material Ps while winding the same around a 3-inch paper tube. Continuous production was performed in this manner.

<Situation during manufacture and state of fiber reinforced resin sheet material>

When this production was performed for one hour, a fiber reinforced resin sheet material was stably produced. Even without using the conveying belt nor the conveying sheet, the trouble of adhering of the molted resin to the surface of the heating roll nor the cooling roll did not occur. Both the heating rolls 1A, 1B were set to approximately 270 degrees and the fiber sheet material was heated to the extent that it melted the film-shaped PA6 resin which was the resin sheet material, but at a contact portion between the fiber sheet material TsA and the heating roll 1A and at a contact portion between the fiber sheet material TsB and the heating roll 1B, the molten resin was not impregnated into the fiber sheet materials TsA, TsB to the extent that it adhered to the heating roll. Accordingly, it is conceived that the molten resin did not adhere to the heating rolls 1A, 1B but all the molten resins adhered to and were impregnated into the fiber sheet material and the resultant fiber sheet material moved to the cooling roll. The fiber reinforced resin sheet material of approximately 1,200 m was obtained by one hour production, but when the fiber reinforced resin sheet material Ps wound around a 3-inch paper tube was unwound, troubles, such as the entanglement of a fiber portion, where the resin was not impregnated, at both end portions, did not occur and the unwinding could be stably performed through to completion. Note that, when the thickness of the resin-impregnated portion in the obtained fiber reinforced resin sheet material Ps was measured using an external micrometer (manufactured by Mitutoyo Corporation) with the minimum display scale of 0.001 mm, it was approximately 0.074 mm in average. When the thickness tp was calculated in the state where the resin sheet material Js melted and might be completely impregnated into the fiber sheet materials TsA, TsB, it was approximately 0.043 mm. Therefore, the fiber reinforced resin sheet material Ps obtained in this Example was the sheet material in a semi-impregnation state.

[Comparative Example]

<Employed materials>

Reinforcing fiber material: Carbon fiber bundle (manufactured by Toray Industries, Inc., T700SC-60E-12,000/bundle, single-yarn diameter: 7 $\mu$m)
Thermoplastic resin material: PA6 resin film (manufactured by Mitsubishi Plastics Industries, Ltd., DIAMIRON, 160 mm width, 20 $\mu$m thickness)

<Production method>

The production was performed in the apparatus configuration in Example 3 without the extrusion molding apparatus and the mechanism for molding a resin film, such as a T die, and producing a resin sheet material and with a mechanism capable of directly introducing, as the resin sheet material, the PA6 resin film wound around a bobbin attached thereto. Note that, in the spreading apparatus, as with Example 3, the spreading apparatus illustrated in FIG. 15A and FIG. 15B in Japanese patent No. 5553074 was attached to the both sides of the heating roll 1, respectively. As the conveying belt 7, a fluorine-containing resin belt (G type belt) manufactured by Chukoh Belt Corporation, Ltd. was used. The setting temperature of the heating roll 1 was set to 270 degrees, the pressing force between the heating rolls was set to the linear pressure of 25 kgf/cm. and the processing speed was set to 20 m/min.

In each spreading apparatus, four carbon fiber bundles were respectively spread across the width of 38 mm to obtain a spread yarn sheet with the width of 152 mm and with the areal weight of approximately 21 g/m$^2$, and were continuously introduced into the heating roll as the fiber sheet materials TsA, TsB, respectively. In this Comparative Example, the fiber sheet material TsA and fiber sheet material TsB were arranged so that the both ends thereof overlapped with each other. Then, the fiber sheet material TsA was continuously introduced along the heating roll 1A while the fiber sheet material TsB was continuously introduced along the heating roll 1B. The resin sheet material Js was continuously introduced along the upper side of the fiber sheet material TsB of the heating roll 1B such that the end portion 10 of the resin sheet material Js was continuously arranged at the position of the length of 4 mm outward from the end portion 8A of the fiber sheet material TsA and the end portion 8B of the fiber sheet material TsB, and the end portion 11 of the resin sheet material Js was continuously arranged at the position of the length of 4 mm outward from the end portion 9A of the fiber sheet material TsA and the end portion 9B of the fiber sheet material TsB. The introduced fiber sheet materials TsA, TsB and resin sheet material Js were heated and pressed, and then introduced, as is, into the cooling roll and peeled off from the conveying belt to obtain the fiber reinforced resin sheet material Ps while winding the same around a 3-inch paper tube. Continuous production was performed in this manner.

<Situation during manufacture and state of fiber reinforced resin sheet material>

This production was performed and then after a while, the portion of the resin sheet material protruding from the both ends of the fiber sheet material started to adhere to the conveying belt. As the production was continuously performed in this state, the amount of this adhesion increased and the thickness thereof started to increase. At the same time, in the fiber reinforced resin sheet material, a portion where the resin was not impregnated into the fiber bundle started to be continuously generated. Moreover, some of carbon fibers adhered to the portion of the adhesion resin and this fiber winded around the conveying belt. In this state, the production could not be performed, so the production was stopped. When the wound fiber reinforced resin sheet material was checked, at the beginning and at the end a sheet material in a different impregnation state of resin was produced.

Reference Signs List

| | |
|---|---|
| Ts | fiber sheet material |
| Js | resin sheet material |
| Ps | fiber reinforced resin sheet material |
| Tm | fiber bundle |
| Jf | resin film |
| 1 | heating roll |
| 2 | cooling roll |
| 3 | pull-in roll |
| 4, 5, 6 | drive motor |
| 7 | conveying belt |
| 8, 9 | end portion of fiber sheet material |
| 10, 11 | end portion of resin sheet material |
| 12 | T die |
| 13 | film cooling roll |
| 14 | slitting lower-receiving roll |
| 15 | slitting rotary blade |
| 16 | end portion film |
| 17 | turnaround roll |
| 18 | feed mechanism |
| 19 | air-spreading mechanism |
| 20 | longitudinal vibration applying mechanism |
| 21 | lateral vibration applying mechanism |
| 22 | bobbin |

| 23 | wind tunnel pipe |
| 24 | guide roll |
| 25 | bend securing roll |
| 26 | hot air generation blower |
| 27 | air suction blower |
| 28 | suction amount adjusting valve |
| 29 | support roll |
| 30 | pressing roll |
| 31 | drive motor |
| 32 | vibrating roll |
| 33 | support roll |
| 34 | drive motor |

**Claims**

1. A production method for a fiber reinforced resin sheet material (Ps), the method comprising:

a superimposing step of conveying and superimposing a fiber sheet material (Ts) and a resin sheet material (Js) in such way that both side end portions (8, 9) of the fiber sheet material are arranged outside both side end portions (10, 11) of the resin sheet material;
an integrating step of obtaining a composite sheet material by heating and pressing while conveying the superimposed fiber sheet material (Ts) and resin sheet material (Js) and thereby melting and impregnating or semi-impregnating and integrating the resin sheet material (Js) into the fiber sheet material (Ts), the composite sheet material being formed such that the both side end portions (8, 9) of the fiber sheet material (Ts) are arranged outside the both side end portions (10, 11) of the resin sheet material (Js); and
a solidifying step of solidifying a resin by cooling while conveying the composite sheet material and thereby forming a fiber reinforced resin sheet material (Ps) wherein a fiber sheet portion, into which a resin is not impregnated or semi-impregnated, is present in the both side end portions of the fiber reinforced resin sheet material (Ps).

2. The production method for a fiber reinforced resin sheet material (Ps) according to claim 1, wherein at least in the superimposing step to the solidifying step, the fiber sheet material (Ts) is conveyed in a state where a tension is applied across the entire width thereof, the composite sheet material and the fiber reinforced resin sheet material (Ps) are conveyed in a state where a tension is applied across an entire width including a side end portion (8, 9) of the fiber sheet material where the resin sheet material (Js) is not impregnated or semi-impregnated into the fiber sheet material (Ts).

3. The production method for a fiber reinforced resin sheet material (Ps) according to claim 1 or 2, wherein the fiber sheet material comprises a spread fiber bundle (Tm) processed by a spreading method including:

a fluidly-spreading step of spreading a fiber bundle (Tm) by moving the fiber bundle (Tm) in a width direction while bending a fiber by causing fluid to pass through the fiber bundle(Tm);
a longitudinal vibration applying step of repeatedly applying a change operation in which a part of the fiber bundle (Tm) is pressed to become in a state of tension while causing a contact member to contact the fiber bundle (Tm) to be conveyed, and then the contact member is spaced from the fiber bundle in the state of tension and temporarily setting the fiber bundle (Tm) into a state of relaxation; and
a lateral vibration applying step of reciprocatively vibrating, in the width direction, the fiber bundle (Tm) having been spread.

4. The production method for a fiber reinforced resin sheet material (Ps) according to claim 3, wherein an areal weight of the spread fiber bundle (Tm) is 10 g/m$^2$ to 80 g/m$^2$.

5. The production method for a fiber reinforced resin sheet material (Ps) according to any of claims 1 to 4, wherein in the integrating step, for the fiber sheet material (Ts) comprising a plurality of fiber bundles (Tm) or the spread fiber bundles arranged in the width direction, both side end portions (10, 11) of the resin sheet material (Js) are impregnated or semi-impregnated into the fiber bundle or spread fiber bundle arranged at an utmost side-end of the fiber sheet material.

**6.** The production method for a fiber reinforced resin sheet material (Ps) according to any of claims 1 to 5, wherein an average thickness in a width direction of the resin sheet material (Js) is 10 $\mu$m to 50 $\mu$m.

**7.** The production method for a fiber reinforced resin sheet material (Ps) according to any of claims 1 to 6, wherein the integrating step comprises forming the resin sheet material (Js) so that a deviation of the thickness in the width direction from an average thickness thereof falls within $\pm$10% of the average thickness.

**8.** The production method for a fiber reinforced resin sheet material (Ps) according to any of claims 1 to 7, wherein the resin sheet material (Js) introduced in the superimposing step is continuously formed by slitting both ends of a resin film (Jf) while molding the resin film (Jf) by extrusion molding.

**9.** The production method for a fiber reinforced resin sheet material (Ps) according to any of claims 1 to 8, wherein in the superimposing step, the resin sheet material (Js) is superimposed on one side of the fiber sheet material (Ts), and in the integrating step, a heating temperature on a side of the superimposed fiber sheet material is set equal to or higher than a melting temperature of the resin sheet material, and a heating temperature on a side of the superimposed resin sheet material is set lower than the melting temperature of the resin sheet material (Js).

**10.** The production method for a fiber reinforced resin sheet material (Ps) according to claims 1 to 8, wherein in the superimposing step, the fiber sheet material (TsA, TsB) is arranged on both sides of the resin sheet material.

**11.** The production method for a fiber reinforced resin sheet material (Ps) according to claim 10, wherein in the superimposing step, the fiber sheet material (TsA, TsB) comprising a plurality of the fiber bundles (Tm) or the spread fiber bundles arranged in the width direction is shifted in the width direction so that the fiber bundles (Tm) or the spread fiber bundles do not overlap with each other.

**12.** The production method for a fiber reinforced resin sheet material (Ps) according to claim 10 or 11, wherein in the superimposing step, both side end portions (8, 9) of the fiber sheet material (TsA, TsB) arranged on both sides of the resin sheet material (Js) are arranged outside both side end portions (10, 11) of the resin sheet material (Js).

**13.** The production method for a fiber reinforced resin sheet material (Ps) according to claim 12, wherein in the integrating step, the composite sheet material is heated and pressed so that a thickness thereof becomes thicker than a thickness in a state where the resin sheet material (Js) melts and is completely impregnated into the fiber sheet material (TsA, TsB).

**Patentansprüche**

**1.** Ein Herstellungsverfahren für ein faserverstärktes Harzfolienmaterial (Ps), wobei das Verfahren umfasst:

einen Schritt des Übereinanderlegens zum Fördern und Übereinanderlegen eines Faserfolienmaterials (Ts) und eines Harzfolienmaterials (Js) derart, dass beide Seitenendabschnitte (8, 9) des Faserfolienmaterials außerhalb der beiden Seitenendabschnitte (10, 11) des Harzfolienmaterials angeordnet sind;
einen Integrationsschritt zum Erhalten eines Verbundfolienmaterials durch Erhitzen und Pressen, während das übereinandergelegte Faserfolienmaterial (Ts) und das Harzfolienmaterial (Js) transportiert werden und dadurch das Harzfolienmaterial (Js) schmilzt und imprägniert oder halbimprägniert und in das Faserfolienmaterial (Ts) integriert wird, wobei das Verbundfolienmaterial derart geformt wird, dass die beiden Seitenendabschnitte (8, 9) des Faserfolienmaterials (Ts) außerhalb der beiden Seitenendabschnitte (10, 11) des Harzfolienmaterials (Js) angeordnet sind; und
einen Verfestigungsschritt zum Verfestigen eines Harzes durch Abkühlen während des Förderns des Verbundfolienmaterials und dadurch Bilden eines faserverstärkten Harzfolienmaterials (Ps), wobei ein Faserfolienabschnitt, in das kein Harz imprägniert oder halbimprägniert ist, in den beiden Seitenendabschnitten des faserverstärkten Harzfolienmaterials (Ps) vorhanden ist.

**2.** Herstellungsverfahren für ein faserverstärktes Harzfolienmaterial (Ps) gemäß Anspruch 1, wobei zumindest in dem Schritt des Übereinanderlegens bis zum Verfestigungsschritt das Faserfolienmaterial (Ts) in einem Zustand befördert wird, in dem eine Spannung über seine gesamte Breite ausgeübt wird, das Verbundfolienmaterial und das faserverstärkte Harzfolienmaterial (Ps) in einem Zustand befördert werden, in dem eine Spannung über eine gesamte Breite einschließlich eines Seitenendabschnitts (8, 9) des Faserfolienmaterials ausgeübt wird, wobei das Harzfolienmaterial (Js) nicht oder nur halb in das Faserfolienmaterial (Ts) imprägniert ist.

3. Herstellungsverfahren für ein faserverstärktes Harzfolienmaterial (Ps) gemäß Anspruch 1 oder 2, wobei das Faserfolienmaterial ein ausgebreitetes Faserbündel (Tm) aufweist, das durch ein Ausbreitungsverfahren verarbeitet wird, das Folgendes umfasst:

einen Fluidausbreitungsschritt des Ausbreitens eines Faserbündels (Tm) durch Bewegen des Faserbündels (Tm) in einer Breitenrichtung, während eine Faser gebogen wird, indem man ein Fluid durch das Faserbündel (Tm) hindurchtreten lässt;
einen Schritt des Aufbringens einer Längsvibration zum wiederholten Anwenden eines Änderungsvorgangs, bei dem ein Teil des Faserbündels (Tm) gepresst wird, um in einen Spannungszustand zu gelangen, während bewirkt wird, dass ein Kontaktelement das zu befördernde Faserbündel (Tm) berührt, und dann das Kontaktelement von dem Faserbündel im Spannungszustand beabstandet und das Faserbündel vorübergehend in einen Relaxationszustand versetzt wird; und
einen Schritt des Aufbringens einer lateralen Vibration zum Hin- und Hervibrieren in der Breitenrichtung, wobei das Faserbündel (Tm) ausgebreitet wurde.

4. Herstellungsverfahren für ein faserverstärktes Harzfolienmaterial (Ps) gemäß Anspruch 3, wobei ein Flächengewicht des ausgebreiteten Faserbündels (Tm) 10 g/m$^2$ bis 80 g/m$^2$ beträgt.

5. Herstellungsverfahren für ein faserverstärktes Harzfolienmaterial (Ps) gemäß einem der Ansprüche 1 bis 4, wobei in dem Integrationsschritt für das Faserfolienmaterial (Ts), das eine Vielzahl von Faserbündeln (Tm) oder die ausgebreiteten Faserbündel umfasst, die in der Breitenrichtung angeordnet sind, beide Seitenendabschnitte (10, 11) des Harzfolienmaterials (Js) in das Faserbündel oder das ausgebreitete Faserbündel, das an einem äußersten Seitenende des Faserfolienmaterials angeordnet ist, imprägniert oder halb-imprägniert werden.

6. Herstellungsverfahren für ein faserverstärktes Harzfolienmaterial (Ps) gemäß einem der Ansprüche 1 bis 5, wobei eine durchschnittliche Dicke des Harzfolienmaterials (Js) in Breitenrichtung 10 $\mu$m bis 50 $\mu$m beträgt.

7. Herstellungsverfahren für ein faserverstärktes Harzfolienmaterial (Ps) gemäß einem der Ansprüche 1 bis 6, wobei der Integrationsschritt das Bilden des Harzfolienmaterials (Js) umfasst, so dass eine Abweichung der Dicke in der Breitenrichtung von einer durchschnittlichen Dicke davon innerhalb von $\pm$10 % der durchschnittlichen Dicke liegt.

8. Herstellungsverfahren für ein faserverstärktes Harzfolienmaterial (Ps) gemäß einem der Ansprüche 1 bis 7, wobei das in dem Schritt des Übereinanderlegens eingeführte Harzfolienmaterial (Js) kontinuierlich durch Schlitzen beider Enden eines Harzfilms (Jf) gebildet wird, während der Harzfilm (Jf) durch Extrusionsformen gebildet wird.

9. Herstellungsverfahren für ein faserverstärktes Harzfolienmaterial (Ps) gemäß einem der Ansprüche 1 bis 8, wobei in dem Schritt des Übereinanderlegens das Harzfolienmaterial (Js) auf eine Seite des Faserfolienmaterials (Ts) aufgelegt wird, und in dem Integrationsschritt eine Heiztemperatur auf einer Seite des aufgelegten Faserfolienmaterials gleich oder höher als eine Schmelztemperatur des Harzfolienmaterials eingestellt wird, und eine Heiztemperatur auf einer Seite des aufgelegten Harzfolienmaterials niedriger als die Schmelztemperatur des Harzfolienmaterials (Js) eingestellt wird.

10. Herstellungsverfahren für ein faserverstärktes Harzfolienmaterial (Ps) gemäß den Ansprüchen 1 bis 8, wobei in dem Schritt des Übereinanderlegens das Faserfolienmaterial (TsA, TsB) auf beiden Seiten des Harzfolienmaterials angeordnet wird.

11. Herstellungsverfahren für ein faserverstärktes Harzfolienmaterial (Ps) gemäß Anspruch 10, wobei in dem Schritt des Übereinanderlegens das Faserfolienmaterial (TsA, TsB), das eine Vielzahl der Faserbündel (Tm) oder der ausgebreiteten Faserbündel, die in der Breitenrichtung angeordnet sind, aufweist, in der Breitenrichtung verschoben wird, so dass die Faserbündel (Tm) oder die ausgebreiteten Faserbündel einander nicht überlappen.

12. Herstellungsverfahren für ein faserverstärktes Harzfolienmaterial (Ps) gemäß Anspruch 10 oder 11, wobei in dem Schritt des Übereinanderlegens beide Seitenendabschnitte des Faserfolienmaterials (TsA, TsB), die auf beiden Seiten des Harzfolienmaterials (Js) angeordnet sind, außerhalb beider Seitenendabschnitte (10, 11) des Harzfolienmaterials (Js) angeordnet sind.

**13.** Herstellungsverfahren für ein faserverstärktes Harzfolienmaterial (Ps) gemäß Anspruch 12, wobei in dem Integrationsschritt das Verbundfolienmaterial erhitzt und gepresst wird, so dass eine Dicke davon dicker wird als eine Dicke in einem Zustand, in dem das Harzfolienmaterial (Js) schmilzt und vollständig in das Faserfolienmaterial (TsA, TsB) imprägniert ist.

**Revendications**

**1.** Procédé de production d'un matériau en feuille de résine renforcée par des fibres (Ps), le procédé comprenant :

une étape de superposition consistant à transporter et à superposer un matériau en feuille de fibres (Ts) et un matériau en feuille de résine (Js) de sorte que les deux parties d'extrémité latérales (8, 9) du matériau en feuille de fibres sont disposées à l'extérieur des deux parties d'extrémité latérales (10, 11) du matériau en feuille de résine ;

une étape d'intégration consistant à obtenir un matériau en feuille composite par chauffage et pression tout en transportant le matériau en feuille de fibres (Ts) et le matériau en feuille de résine (Js) superposés et ainsi fusion et imprégnation ou semi-imprégnation et intégration du matériau en feuille de résine (Js) dans le matériau en feuille de fibres (Ts), le matériau en feuille composite étant formé de sorte que les deux parties d'extrémité latérales (8, 9) du matériau en feuille de fibres (Ts) sont disposées à l'extérieur des deux parties d'extrémité latérales (10, 11) du matériau en feuille de résine (Js) ; et

une étape de solidification consistant à solidifier une résine par refroidissement tout en transportant le matériau en feuille composite et formation ainsi d'un matériau en feuille de résine renforcée par des fibres (Ps) dans lequel une partie de feuille de fibres, dans laquelle une résine n'est pas imprégnée ou semi-imprégnée, est présente dans les deux parties d'extrémité latérales du matériau en feuille de résine renforcée par des fibres (Ps).

**2.** Procédé de production d'un matériau en feuille de résine renforcée par des fibres (Ps) selon la revendication 1, dans lequel au moins dans l'étape de superposition jusqu'à l'étape de solidification, le matériau en feuille de fibres (Ts) est transporté dans un état où une tension est appliquée à travers toute sa largeur, le matériau en feuille composite et le matériau en feuille de résine renforcée par des fibres (Ps) sont transportés dans un état où une tension est appliquée sur toute une largeur y compris une partie d'extrémité latérale (8, 9) du matériau en feuille de fibres où le matériau en feuille de résine (Js) n'est pas imprégné ou semi-imprégné dans le matériau en feuille de fibres (Ts).

**3.** Procédé de production d'un matériau en feuille de résine renforcée par des fibres (Ps) selon la revendication 1 ou 2, dans lequel le matériau en feuille de fibres comprend un faisceau de fibres étalé (Tm) traité par un procédé d'étalement comprenant :

une étape d'étalement par fluide consistant à étaler un faisceau de fibres (Tm) par déplacement du faisceau de fibres (Tm) dans une direction de largeur tout en pliant une fibre en faisant passer un fluide à travers le faisceau de fibres (Tm) ;

une étape d'application de vibration longitudinale consistant à appliquer de manière répétée une opération de changement dans laquelle une partie du faisceau de fibres (Tm) est pressée pour passer dans un état de tension tout en amenant un élément de contact à entrer au contact du faisceau de fibres (Tm) à transporter, puis l'élément de contact est écarté du faisceau de fibres dans l'état de tension et met temporairement le faisceau de fibres (Tm) dans un état de relaxation ; et

une étape d'application de vibration latérale consistant à faire vibrer en va et vient, dans la direction de la largeur, le faisceau de fibres (Tm) ayant été étalé.

**4.** Procédé de production d'un matériau en feuille de résine renforcée par des fibres (Ps) selon la revendication 3, dans lequel un poids surfacique du faisceau de fibres étalé (Tm) est de 10 g/m$^2$ à 80 g/m$^2$.

**5.** Procédé de production d'un matériau en feuille de résine renforcée par des fibres (Ps) selon l'une quelconque des revendications 1 à 4, dans lequel à l'étape d'intégration, pour le matériau en feuille de fibres (Ts) comprenant une pluralité de faisceaux de fibres (Tm) ou les faisceaux de fibres étalés disposés dans la direction de la largeur, les deux parties d'extrémité latérales (10, 11) du matériau en feuille de résine (Js) sont imprégnées ou semi-imprégnées dans le faisceau de fibres ou le faisceau de fibres étalé disposé à une extrémité latérale extrême du matériau en feuille de fibres.

**6.** Procédé de production d'un matériau en feuille de résine renforcée par des fibres (Ps) selon l'une quelconque des revendications 1 à 5, dans lequel une épaisseur moyenne dans une direction de largeur du matériau en feuille de résine (Js) est de 10 $\mu$m à 50 $\mu$m.

**7.** Procédé de production d'un matériau en feuille de résine renforcée par des fibres (Ps) selon l'une quelconque des revendications 1 à 6, dans lequel l'étape d'intégration comprend la formation du matériau en feuille de résine (Js) de sorte qu'un écart de l'épaisseur dans la direction de la largeur par rapport à une épaisseur moyenne de celui-ci entre dans $\pm$ 10 % de l'épaisseur moyenne.

**8.** Procédé de production d'un matériau en feuille de résine renforcée par des fibres (Ps) selon l'une quelconque des revendications 1 à 7, dans lequel le matériau en feuille de résine (Js) introduit à l'étape de superposition est formé en continu par découpes des deux extrémités d'un film de résine (Jf) lors du moulage du film de résine (Jf) par moulage par extrusion.

**9.** Procédé de production d'un matériau en feuille de résine renforcée par des fibres (Ps) selon l'une quelconque des revendications 1 à 8, dans lequel à l'étape de superposition, le matériau en feuille de résine (Js) est superposé sur un côté du matériau en feuille de fibres (Ts), et à l'étape d'intégration, une température de chauffage sur un côté du matériau en feuille de fibres superposé est supérieure ou égale à une température de fusion du matériau en feuille de résine, et une température de chauffage sur un côté du matériau en feuille de résine superposé est inférieure à la température de fusion du matériau en feuille de résine (Js).

**10.** Procédé de production d'un matériau en feuille de résine renforcée par des fibres (Ps) selon les revendications 1 à 8, dans lequel, à l'étape de superposition, le matériau en feuille de fibres (TsA, TsB) est disposé des deux côtés du matériau en feuille de résine.

**11.** Procédé de production d'un matériau en feuille de résine renforcée par des fibres (Ps) selon la revendication 10, dans lequel à l'étape de superposition, le matériau en feuille de fibres (TsA, TsB) comprenant une pluralité des faisceaux de fibres (Tm) ou des faisceaux de fibres étalés disposés dans la direction de la largeur est décalé dans la direction de la largeur de telle sorte que les faisceaux de fibres (Tm) ou les faisceaux de fibres étalés ne se chevauchent pas.

**12.** Procédé de production d'un matériau en feuille de résine renforcée par des fibres (Ps) selon la revendication 10 ou 11, dans lequel à l'étape de superposition, les deux parties d'extrémité latérales (8, 9) du matériau en feuille de fibres (TsA, TsB) disposées sur les deux côtés du matériau en feuille de résine (Js) sont disposées à l'extérieur des deux parties d'extrémité latérales (10, 11) du matériau en feuille de résine (Js).

**13.** Procédé de production d'un matériau en feuille de résine renforcée par des fibres (Ps) selon la revendication 12, dans lequel à l'étape d'intégration, le matériau en feuille composite est chauffé et pressé de sorte qu'une épaisseur de celui-ci devient plus épaisse qu'une épaisseur dans un état où le matériau en feuille de résine (Js) fond et est complètement imprégné dans le matériau en feuille de fibres (TsA, TsB).

# FIG. 1

# FIG. 2

FIG. 3

FIG. 4

# FIG. 5

# FIG. 6

FIG. 7

FIG. 8A

FIG. 8B

# FIG. 9

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7016936 A
- JP 7016835 A
- JP 2012110935 A
- JP H03243309 A
- JP 4813581 B
- JP 4740131 B
- JP 5326170 B
- JP 5553074 B
- JP 3876276 B
- JP 6075800 A
- JP 2014221490 A